# EUROPEAN PATENT SPECIFICATION

(11) **EP 2 280 449 B1**
(45) Date of publication and mention of the grant of the patent: **16.10.2019**
(21) Application number: 09750597.8
(22) Date of filing: 20.05.2009
(51) Int. Cl.: H01Q 7/00, G06K 19/07, G06K 19/077, H01Q 1/38, H01Q 23/00, H04B 5/00

(54) **WIRELESS IC DEVICE AND METHOD FOR MANUFACTURING THE SAME**
DRAHTLOSES IC-ELEMENT UND HERSTELLUNGSVERFAHREN DAFÜR
DISPOSITIF CI SANS FIL ET SON PROCÉDÉ DE FABRICATION

(30) Priority: 22.05.2008 JP 2008133829; 31.03.2009 WO PCT/JP2009/056698
(43) Date of publication of application: 02.02.2011
(73) Proprietor: Murata Manufacturing Co. Ltd., Kyoto 617-8555 (JP)
(72) Inventor: KATO Noboru, Nagaokakyo-shi Kyoto 617-8555 (JP); SASAKI Jun, Nagaokakyo-shi Kyoto 617-8555 (JP); ISHINO Satoshi, Nagaokakyo-shi Kyoto 617-8555 (JP); TANIGUCHI Katsumi, Nagaokakyo-shi Kyoto 617-8555 (JP)
(74) Representative: Zimmermann, Tankred Klaus
(86) International application number: PCT/JP2009/059259
(87) International publication number: WO 2009/142235

(56) References cited:
- JP-A- 10 193 851
- JP-A- 10 193 851
- JP-A- 2000 261 230
- JP-A- 2006 042 097
- JP-A- 2008 072 243
- JP-A- 2008 072 243

## Description

### Technical Field

The present invention relates to a wireless integrated circuit (IC) device and to a method of manufacturing the wireless IC device. More specifically, the present invention relates to a wireless IC device having a wireless IC that is used in radio frequency identification (RFID) systems and to a method of manufacturing the wireless IC device.

JP 2000-261230 discloses a coil unit provided with plural base materials stacked together and coils formed in each base material to provide an IC module.

JP 10-193851 discloses a non-contact card comprising an antenna part of a first layer by printing a pattern of a loop shape by use of silver paste on a surface of a base material of an IC card.

JP 2008-072243 discloses a wireless IC device having a radiation plate with electromagnetic coupling modules having different resonance frequencies mounted thereon.

### Background Art

For example, a non-contact IC card described in Patent Document 1 is known as an example of wireless IC devices used for access management, commuter passes, credit cards and the like. Fig. 19(a) is a top surface view of a non-contact IC card 100 described in Patent Document 1 and Fig. 19(b) is bottom surface view of the non-contact IC card 100 described in Patent Document 1.

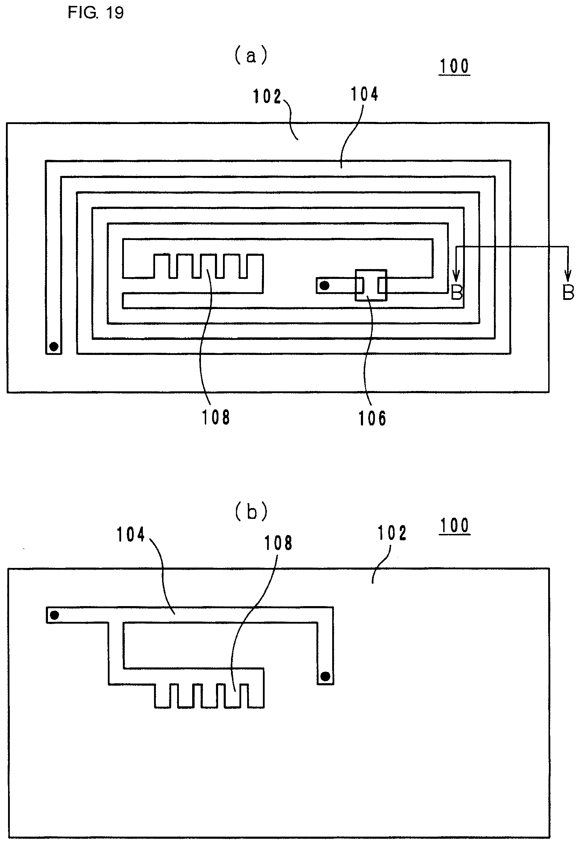

In the non-contact IC card 100 illustrated in Fig. 19, an antenna coil 104, which loops in a spiral shape a plurality of times, is formed on a main surface of a substrate 102, and an adjustment resistor (not illustrated in Fig. 19) and an adjustment capacitor 108 are connected to the antenna coil 104. Furthermore, an IC 106 is connected to the antenna coil 104. In this non-contact IC card, by trimming part of the adjustment resistor and the adjustment capacitor 108 at the time of manufacture, the resistance value and the capacitance value of the non-contact IC card 100 can be adjusted and the resonant frequency and sharpness (Q) can be adjusted.

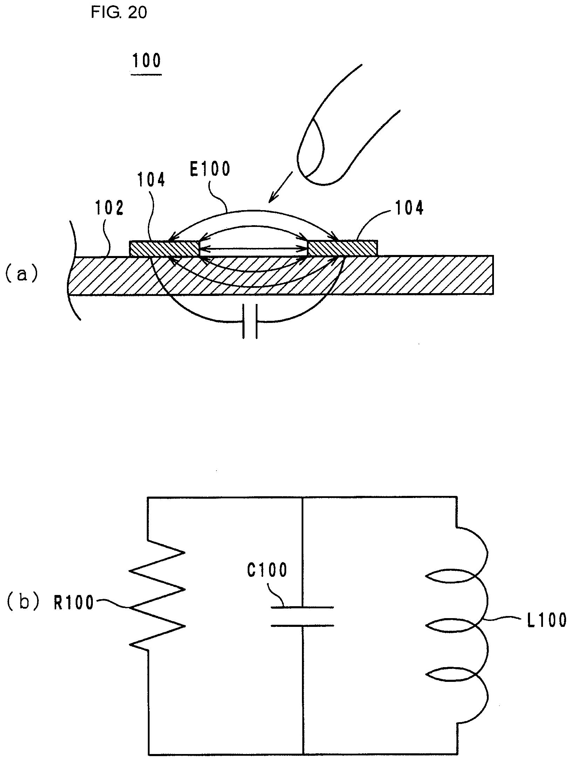

However, with the non-contact IC card 100, as will be described below with reference to the drawings, the inventors of the present application discovered that the resonant frequency varies at the time of use. Fig. 20(a) is a sectional structural view of the antenna coil and the substrate of the non-contact IC card 100 taken along line B-B and Fig. 20(b) is an equivalent circuit diagram of the non-contact IC card 100. The substrate 102 and the antenna coil 104 are illustrated in Fig. 20(a). In addition, in Fig. 20(b), an inductance L100 of the antenna coil 104, a resistance R100 of the IC 106 and a capacitance C100 of the antenna coil 104 are illustrated.

In the non-contact IC card 100, the antenna coil 104 loops a plurality of times in a spiral shape on the main surface of the substrate 102. In the non-contact IC card 100, as illustrated in Fig. 20(a), the wires that constitute the antenna coil 104 are arranged side by side and close to each other on the main surface. When a current flows through the close together wires, due to the potential difference between the wires, electric force lines E100 are generated that link the wires, as illustrated by the arrows, and the capacitance C100 is generated between the wires. The capacitance C100, as illustrated in Fig. 20(b), is connected in parallel with and between the inductance L100 and the resistance R100. Furthermore, in the non-contact IC card 100, the shape of the antenna coil 104 is designed so that values of the inductance L100 and the capacitance C100 are obtained that result in the desired resonant frequency.

However, even when the shape of the antenna coil 104 has been designed so that the desired resonant frequency can be obtained, the inventors of the present application discovered that the resonant frequency of the non-contact IC card 100 varies with the condition of use. Consequently, the inventors of the present application performed experiments and computer simulations and investigated the cause of the varying of the resonant frequency of the non-contact IC card 100. As a result, occurrence of the below-described phenomenon in the non-contact IC card 100 was discovered to be the cause of the varying of the resonant frequency.

In more detail, the non-contact IC card 100 is used for example for access management or as a commuter pass or a credit card. This type of non-contact IC card 100 is usually used by being brought close to a dedicated reader/writer while being held in a person's hand. Therefore, as illustrated in Fig. 20(a), at the time of use, the person's finger is positioned in the vicinity of the antenna coil 104 and the electric force lines E100 pass through the inside of the person's finger. Since the dielectric constant of a person's finger is much larger than that of air, when the person's finger comes close to the space between the wires of the antenna coil 104, the capacitance C100 generated between the wires of the antenna coil 104 increases. As a result, the resonant frequency of the non-contact IC card 100 becomes lower than the desired resonant frequency.

Here, the way in which the non-contact IC card 100 is held often differs with the condition of use and therefore the positional relationship between the wires of the antenna coil 104 and the person's hand is not fixed. Accordingly, the amount by which the capacitance C100 increases also varies with the condition of use and the amount by which the resonant frequency of the non-contact IC card 100 decreases also varies with the condition of use. In other words, the resonant frequency of the non-contact IC card 100 varies with the condition of use. In this way, if the resonant frequency of the non-contact IC card 100 varies, a correspondence cannot be obtained by trimming an adjustment capacitor at the time of manufacture to adjust the resonant frequency.

[Patent Document 1] Japanese Unexamined Patent Application Publication No. 2001-10264

### Disclosure of Invention

### Problems to be Solved by the Invention

Accordingly, an object of the present invention is to provide a wireless IC device for which varying of the resonant frequency with the condition of use can be reduced and a method of manufacturing the wireless IC device.

### Means for Solving the Problems

The invention is set out in the independent claims whereas preferred embodiments are outlined in the dependent claims.

### Advantages

With the wireless IC device according to the aspect of the present invention and the method of manufacturing the wireless IC device, the plurality of coil electrodes are superposed with one another and thereby form a single ring when viewed in plan from the normal direction with respect to the insulating sheets. Therefore, in the wireless IC device, the coil electrodes are not side by side with one another in a state in which the coil electrodes are close to each other in a direction in which the main surface of an insulating sheet extends. Consequently, leaking of the electric force lines generated between the coil electrodes to outside the wireless IC device is suppressed. As a result, varying of the resonant frequency of the wireless IC device due to changing of the capacitance generated in the coil electrodes with the way in which the wireless IC device is held is suppressed.

The invention is defined by the appended claims. In the following, embodiments not falling within the scope of the claims should be understood as examples useful to understand the invention.

### Brief Description of Drawings

Fig. 1 is an exploded perspective view of a wireless IC device according to a first embodiment.
Fig. 2(a) is drawing in which the wireless IC device of Fig. 1 is viewed in plan from a z-axis direction. Fig. 2(b) is a sectional structural view of the wireless IC device illustrated in Fig. 2(a) taken along line A-A.
[Fig. 3] An equivalent circuit diagram of the wireless IC device illustrated in Fig. 1.
[Fig. 4] Fig. 4(a) is a graph illustrating a loss characteristic of a first sample and Fig. 4(b) is a graph illustrating a loss characteristic of a second sample.
[Fig. 5] An exploded perspective view of a wireless IC device according to a second embodiment.
[Fig. 6] A sectional structural view of the wireless IC device of Fig. 5 in the zy-plane.
[Fig. 7] An exploded perspective view of a wireless IC device according to a third embodiment.
[Fig. 8] A sectional structural view of the wireless IC device of Fig. 7 in the zy-plane.
[Fig. 9] An exploded perspective view of a wireless IC device according to a fourth embodiment.
[Fig. 10] A sectional structural view of the vicinity of a connector of the wireless IC device of Fig. 9 in the zy-plane.
Fig. 11(a) is an top surface view of a wireless IC device according to a fifth embodiment. Fig. 11(b) is a bottom surface view of the wireless IC device according to the fifth embodiment.
[Fig. 12] An exploded perspective view of a wireless IC device according to a sixth embodiment.
[Fig. 13] A sectional structural view of the vicinity of an electromagnetic coupling module of the wireless IC device of Fig. 12 in the xz-plane.
[Fig. 14] An exploded perspective view of a feeder circuit board.
[Fig. 15] An exploded perspective view of a wireless IC device according to a seventh embodiment.
Fig. 16(a) is a sectional structural view of the vicinity of a wireless IC of a wireless IC device according to a reference example in the zy-plane and Fig. 16(b) is a sectional structural view of the vicinity of the wireless IC of the wireless IC device in the zy-plane.
[Fig. 17] An enlarged view of a coil electrode of the wireless IC device of Fig. 1.
[Fig. 18] An exploded perspective view of a wireless IC card.
Fig. 19(a) is an top surface view of a non-contact IC card described in Patent Document 1 and Fig. 19(b) is a bottom surface view of the non-contact IC card described in Patent Document 1.
Fig. 20(a) is a sectional structural view of an antenna coil and a substrate of the non-contact IC card taken along the line B-B and Fig. 20(b) is an equivalent circuit diagram of the non-contact IC card.

### Reference Numerals

- b1 to b3, b11 to b13, b21, b22: via hole conductors
- 10a to 10g: wireless IC devices
- 12a to 12d: insulating sheets
- 14a to 14d, 24a, 24d, 34b, 54a, 54b: coil electrodes
- 16, 20a to 20d, 40c, 40d, 42b, 42c, 56: connectors
- 60: electromagnetic coupling module
- 70: feeder circuit board
- 80: wireless IC card

### Best Modes for Carrying Out the Invention

Hereafter, wireless IC devices and a method of manufacturing the wireless IC devices according to embodiments of the present invention will be described with reference to the drawings. In each of the drawings, common components and parts are denoted by the same reference symbols and repeated description thereof is omitted.

### First Embodiment

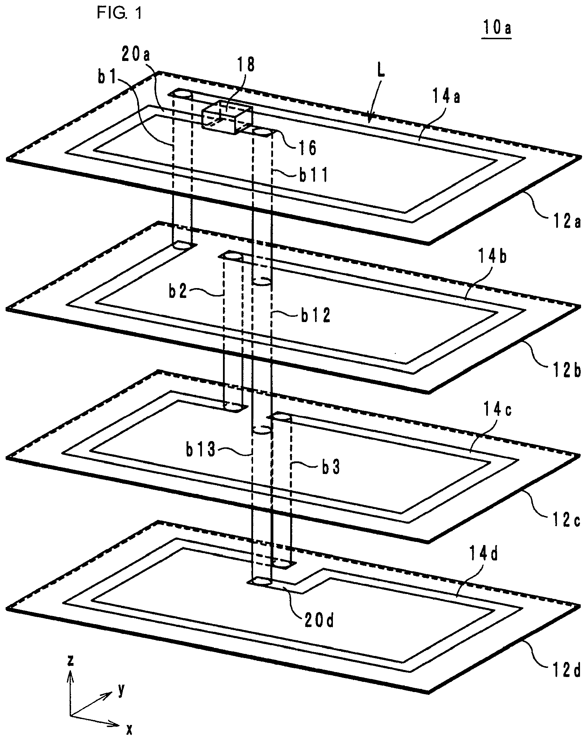

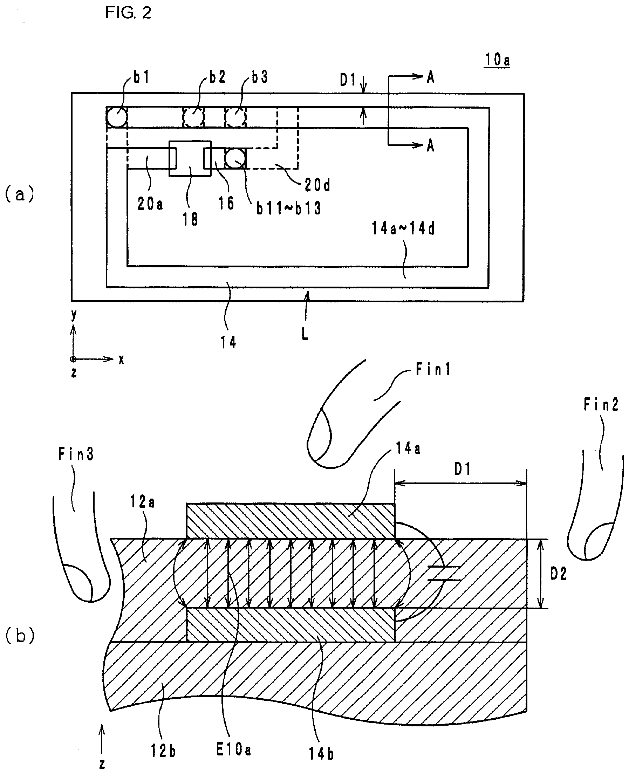

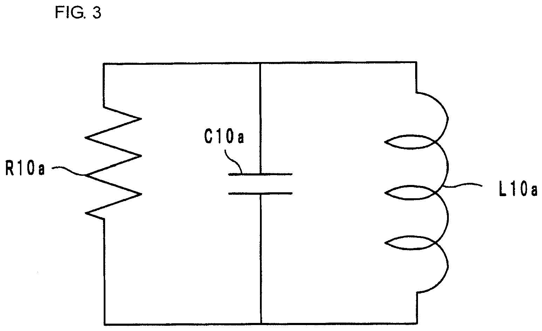

Hereafter, a wireless IC device according to a first embodiment of the present invention will be described with reference to the drawings. Fig. 1 is an exploded perspective view of a wireless IC device 10a according to the first embodiment. In Fig. 1, the x-axis extends in the direction of long edges of the wireless IC device 10a, the γ-axis extends in the direction of short edges of the wireless IC device 10a and the z-axis extends in a direction in which layers of the wireless IC device 10a are stacked. Fig. 2(a) is drawing in which the wireless IC device 10a is viewed in plan from a z-axis direction. Fig. 2(b) is a sectional structural view of the wireless IC device 10a illustrated in Fig. 2(a) taken along line A-A. In Fig. 2, a person's fingers are illustrated, but they are illustrated as being much smaller than they are in reality. Fig. 3 is an equivalent circuit diagram of the wireless IC device 10a illustrated in Fig. 1.

The wireless IC device 10a has a resonant frequency of 13.56 MHz and communicates transmission and reception signals to and from a reader/writer by using an electromagnetic induction method. As illustrated in Fig. 1, the wireless IC device 10a includes insulating sheets 12a to 12d, coil electrodes 14a to 14d, a connector 16, a wireless IC 18, connectors 20a and 20d and via-hole conductors b1 to b3 and b11 to b13. Hereafter, when indicating specific structural elements, alphabetic and/or numerical characters are affixed after the reference symbols, whereas when referring to the structural elements in general, the alphabetical and/or numerical characters affixed after the reference symbols are omitted.

The insulating sheets 12 are rectangular sheets composed of an insulating material, and are, for example, manufactured using chloroethylene or polyethylene terephthalate (PET) resin sheets. A direction normal to the insulating sheets 12 coincides with the z-axis direction.

The coil electrodes 14a to 14d are respectively formed on the insulating sheets 12a to 12d from a metal foil such as copper foil or aluminum foil so as to have the same line width. The coil electrodes 14a to 14d are connected to one another and thereby form an antenna coil L having a helical shape that spirals and extends in the z-axis direction. In more detail, the coil electrodes 14 each have a shape in which four line-shaped electrodes that extend along the edges of the insulating sheet 12 are connected to one another forming a ring (rectangle) from which a portion has been cut out. In other words, the coil electrodes 14 each loop through a length less than one circuit about a coil axis of the antenna coil L.

Furthermore, as illustrated in Fig. 2(a), the coil electrodes 14a to 14d are superposed with one another and thereby form a single rectangular ring when viewed in plan from the z-axis direction. That is to say, the coil electrodes 14a to 14d are configured so as not to be side by side with one another in a state in which they are close to one another in the xy-plane, and, as illustrated in Fig. 2(b), are provided so as to oppose each other while sandwiching the insulating layer 12 (in Fig. 2, insulating layer 12a) therebetween. In addition, since the connectors 16 and 20 have characteristics of connecting the coil electrodes 14 and the wireless IC 18 to one another and connecting the coil electrodes 14 to one another, it is necessary to lead out the connectors 16 and 20 to the inside or outside of the antenna coil L. At such a time, the connectors 16 and 20 are side by side with each other in a state in which they are close to the coil electrodes 14 in the xy-plane. However, this degree of closeness does not have a significant effect on the resonant frequency and therefore is permitted in the wireless IC device 10a according to this embodiment.

The via hole conductor b1 is a connection conductor formed so as to extend through the insulating sheet 12a and connects the coil electrode 14a and the coil electrode 14b to each other. The via hole conductor b2 is a connection conductor formed so as to extend through the insulating sheet 12b and connects the coil electrode 14b and the coil electrode 14c to each other. The via hole conductor b3 is a connection conductor formed so as to extend through the insulating sheet 12c and connects the coil electrode 14c and the coil electrode 14d to each other. In this way, the coil electrodes 14a to 14d are electrically connected to one another and form the antenna coil L. In addition, when viewed in plan from the z-axis direction, as illustrated in Fig. 1, it is preferable that the via hole conductors b1 to b3 be provided at positions such that the coil electrodes 14a and 14d are superposed with each other.

The wireless IC 18 is mounted on the insulating sheet 12a and is an integrated circuit for processing transmission and reception signals exchanged with the reader/writer. In the case where the wireless IC device 10a is used as a commuter pass, the wireless IC 18 stores information regarding for example the zones in which the commuter pass can be used and the owner of the commuter pass. Such information may be rewritable and an information processing function other than that of the RFID system composed of the reader/writer and the wireless IC device 10a may be possessed.

The connector 16 is formed from a metal foil on the insulating sheet 12a positioned on the uppermost side in the z-axis direction and is connected to the wireless IC 18.

The connector 20a is formed from a metal foil on the insulating sheet 12a positioned on the uppermost side in the z-axis direction and is connected to the coil electrode 14a and the wireless IC 18. In more detail, one end of the connector 20a is connected to an end portion of the coil electrode 14a on the side not connected to the via hole conductor b1 and the other end of the connector 20a is connected to the wireless IC 18.

The connector 20d is formed from a metal foil on the insulating sheet 12d positioned on the lowermost side in the z-axis direction and is connected to the coil electrode 14d. In more detail, one end of the connector 20d is connected to an end portion of the coil electrode 14d on the side not connected to the via hole conductor b3. Furthermore, the other end of the connector 20d is superposed with the connector 16 when viewed in plan from the z-axis direction.

The via hole conductors b11 to b13 are via hole conductors formed so as to respectively extend through the insulating sheets 12a to 12d and connect the connectors 16 and 20d with each other. The via hole conductors b11 to b13 are provided at the same position when viewed in plan from the z-axis direction.

The wireless IC device 10a is formed by stacking the plurality of insulating sheets 12a to 12d on top of one another, as illustrated in Fig. 1. Accordingly, the wireless IC device 10a forms an equivalent circuit as illustrated in Fig. 3. In more detail, a capacitance C10a of the coil electrode 14a is connected in parallel with and between an inductance L10a of the antenna coil L and a resistance R10a of the wireless IC 18. In addition, the parasitic capacitance of wireless IC 18 is omitted from Fig. 3.

Furthermore, in the wireless IC device 10a, in a state in which the insulating layers 12a to 12d have been stacked on top of one another, the minimum value of the distance between the outer edge of the ring formed by the coil electrodes 14 and the outer edges of the insulating sheets 12 illustrated in Fig. 2(a)is larger than the distance between the coil electrodes 14 in the z-axis direction. In more detail, as illustrated in Fig. 2(b), a distance D1 between the outer edges of the coil electrodes 14 and the outer edges of the insulating sheets 12 is formed so as to be larger than a distance D2 between the coil electrodes 14 in the z-axis direction.

### Effect of the Invention

With the above-described wireless IC device 10a, varying of the resonant frequency with the condition of use can be reduced, as will be described below.

In more detail, in the non-contact IC card 100 of the background art, since the antenna coil 104 loops in a spiral shape a plurality of times on a main surface of a substrate 102, as illustrated in Fig. 20(a), the wires forming the antenna coil 104 are close to each other and side by side on the main surface. When a current flows through the close together wires, due to the potential difference between the wires, electric force lines E100 are generated that link the wires, as illustrated by the arrows, and a capacitance C100 is generated between the wires. The electric force lines E100 are generated in such a way that they circulate above the main surface of the non-contact IC card 100. Therefore, when the non-contact IC card 100 is being held, the electric force lines E100 pass through the inside of the person's hand. The dielectric constant of a person's hand is much higher than that of air and therefore when the person's hand comes close to the space between the wires of the antenna coil 104, the capacitance C100 generated between the wires of the antenna coil 104 increases. As a result, the resonant frequency of the non-contact IC card 100 becomes lower than the desired resonant frequency.

Then, since the way in which the non-contact IC card 100 is held often differs depending on the condition of use, the positional relationship between the wires of the antenna coil 104 and the person's hand is not fixed. Therefore, the amount by which the capacitance C100 increases also varies with the condition of use and the amount by which the resonant frequency of the non-contact IC card 100 decreases also varies with the condition of use. In other words, the resonant frequency of the non-contact IC card 100 varies with the condition of use.

In contrast, in the wireless IC device 10a, the coil electrodes 14a to 14d are superposed with one another in the axial direction as illustrated in Fig. 2(a). Therefore, when a current flows through the antenna coil L, as illustrated in Fig. 2(b), in the space between the opposing coil electrodes 14 (between the coil electrode 14a and the coil electrode 14b in Fig. 2(b)), electric force lines ElOa are generated that contribute to forming the capacitance ClOa illustrated in Fig. 3. In other words, the electric force lines ElOa are not generated above the coil electrode 14a in the z-axis direction. As a result, as illustrated in Fig. 2(b), even when a person's finger Fin1 comes close to the coil electrode 14a, the electric force lines ElOa do not pass through the person's finger Fin1. Therefore, the capacitance C10a does not vary with the way in which the wireless IC device 10a is held and varying of the resonant frequency of the wireless IC device 10a with the condition of use is suppressed.

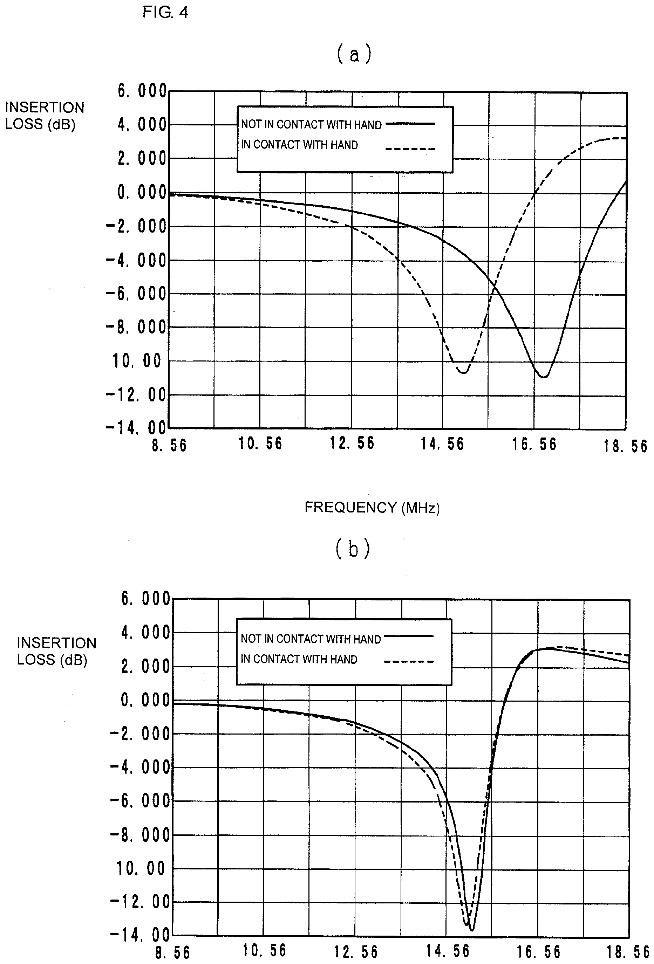

In order to further clarify the above advantage, the inventors of the present application conducted the experiments described below. Specifically, a sample of the non-contact IC card 100 (first sample) illustrated in Fig. 20 was manufactured and a sample of the wireless IC device 10a (second sample) illustrated in Fig. 1 was manufactured. The line width of the antenna coil 104 of the first sample was made to be 1 mm and the line width of the coil electrodes 14 of the second sample was made to be 3 mm. The resonant frequencies of the first and second samples were measured in a state in which they were in contact with a hand and in state in which they were not in contact with a hand. Fig. 4(a) is a graph illustrating a loss characteristic of the first sample and Fig. 4(b) is a graph illustrating a loss characteristic of the second sample. The vertical axis represents insertion loss (dB) and the horizontal axis represents frequency (Mhz).

As illustrated in Fig. 4, in the state in which a hand is not in contact with the sample, it can be understood that the resonant frequency is a little higher than 13.56 MHz for both the first and second samples. Here, when a hand contacts the first sample and the second sample, the resonant frequency of the first sample is lowered by approximately 1.8 MHz. Whereas, the resonant frequency of the second sample is negligibly lowered (by approximately 0.11 MHz). Accordingly, it can be understood that the resonant frequency of the wireless IC device 10a according to the present embodiment is negligibly lowered even when the device is in contact with a hand, in contrast to the resonant frequency of the non-contact IC card 100 being lowered by contact with a hand.

From the above, it was possible to theoretically and experimentally clarify that, with the wireless IC device 10a, between being in a state in which the device is held in a hand and being in a state in which the device is not held in a hand, the resonant frequency negligibly changes. Furthermore, it can also be understood that the resonant frequency of the wireless IC device 10a does not vary with the way in which the wireless IC device 10a is held from the fact that, between being in a state in which it is held in a hand and being in a state in which it is not held in a hand, the resonant frequency of the wireless IC device 10a negligibly changes.

In addition, with the wireless IC device 10a, as will be described below, varying of the resonant frequency due to the material of an overlay sheet is not likely to arise. In more detail, the non-contact IC card 100 and the wireless IC device 10a are generally used in a state in which they are sandwiched from above and below by overlay sheets on which a design has been printed. Such overlay sheets are manufactured using a resin, paper or the like and therefore have a dielectric constant that is larger than that of air. Therefore, with the non-contact IC card 100 of the background art, once such overlay sheets have been adhered, since the electric force lines E100, which contribute to forming the capacitance C100, pass through the overlay sheets, the capacitance C100 of the non-contact IC card 100 becomes larger and the resonant frequency of the non-contact IC card 100 is lowered. Consequently, the non-contact IC card 100 of the background art has been designed such that the resonant frequency is slightly higher than the desired resonant frequency so as to obtain the desired resonant frequency.

However, since overlay sheets can be manufactured from a variety of materials having different dielectric constants such as resins and paper, the dielectric constants of overlay sheets vary depending on the material. Therefore, with the non-contact IC card 100, the resonant frequency varies depending on the material of the overlay sheets and sometimes the desired resonant frequency has not been able to be obtained.

In contrast, with the wireless IC device 10a, as illustrated in Fig. 2(b), the electric force lines ElOa that contribute to forming the capacitance C10a do not leak to outside the wireless IC device 10a and are generated only between the opposing coil electrodes 14. Therefore, even when overlay sheets have been adhered, since the electric force lines E10a do not pass through the insides of the overlay sheets, changing of the resonant frequency between before and after adhering of the overlay sheets can be suppressed. In other words, with the wireless IC device 10a, varying of the resonant frequency due to the material of the overlay sheets is not likely to occur.

Furthermore, with the wireless IC device 10a, since the resonant frequency negligibly changes between before and after adhesion of the overlay sheets, it becomes unnecessary to predict the amount by which the resonant frequency will be lowered by the overlay sheets when designing the wireless IC device 10a. As a result, designing of the wireless IC device 10a can be simplified and the cost of designing the wireless IC device 10a can be reduced.

In addition, with the wireless IC device 10a, since the resonant frequency negligibly changes between before and after adhering of the overlay sheets, there is also no need to adjust the resonant frequency by trimming the adjustment capacitor 108 at the time of manufacture, as was necessary with the non-contact IC card 100 described in Patent Document 1. Trimming the adjustment capacitor 108 has been problematic due to the fact that for example since the adjustment capacitor 108 has often been trimmed by being burned away by irradiation of a laser beam, manufacturing defects have arisen due to holes being formed in the insulating sheets and shorting of contacts. In contrast, with the wireless IC device 10a, since there is no need for the adjustment capacitor 108, this kind of problem does not arise.

Furthermore, with the wireless IC device 10a, the minimum value of the distance D1 between the outer edge of the ring formed by the coil electrodes 14 illustrated in Fig. 2 and the outer edges of the insulating sheets 12 is larger than the distance D2 in the z-axis direction between the coil electrodes 14. Consequently, as will be described below, varying of the resonant frequency with the condition of use of the wireless IC device 10a can be more advantageously suppressed.

In more detail, for example, the wireless IC device 10a is sometimes held by pinching the long edges or the short edges thereof as illustrated in Fig. 2(a). In such a case, as illustrated in Fig. 2(b), a person's finger Fin2 is positioned on a side surface of the wireless IC device 10a. Here, as illustrated in Fig. 2(b), the electric force lines E10a, in addition to being linearly generated between the coil electrode 14a and the coil electrode 14b, also slightly protrude to the outside from the region sandwiched between the coil electrode 14a and the coil electrode 14b. Therefore, in the case where the distance between the outer edge of the ring formed by the coil electrodes 14 and the outer edges of the insulating sheets 12 is small, there is a risk of the electric force lines E10a protruding to outside the insulating sheets 12. As a result, there is a risk of the capacitance C10 changing and the resonant frequency of the wireless IC device 10a changing due to the presence of the person's finger Fin2.

Consequently, with the wireless IC device 10a, as illustrated in Fig. 2, protruding of the electric force lines E10a to outside the region sandwiched between the coil electrodes 14 and to outside the wireless IC device 10a is suppressed by making the distance D1 be larger than the distance D2. Accordingly, even when the wireless IC device 10a is held by pinching the long edges or the short edges thereof, the electric force lines ElOa are prevented from passing through the person's finger Fin2. As a result, varying of the resonant frequency of the wireless IC device 10a with the way in which the wireless IC device 10a is held is more advantageously suppressed.

In addition, in the wireless IC device 10a, when viewed in plan from the z-axis direction, the via hole conductors b1 to b3 are provided at positions so as to be superposed with the coil electrodes 14a and 14d, as illustrated in Fig. 1. Therefore, electric force lines generated between the via hole conductors b1 to b3 and the coil electrodes 14 and that extend toward outside the wireless IC device 10a are blocked by the coil electrodes 14. As a result, varying of the resonant frequency with the condition of use of the wireless IC device 10a can be suppressed.

### Second Embodiment

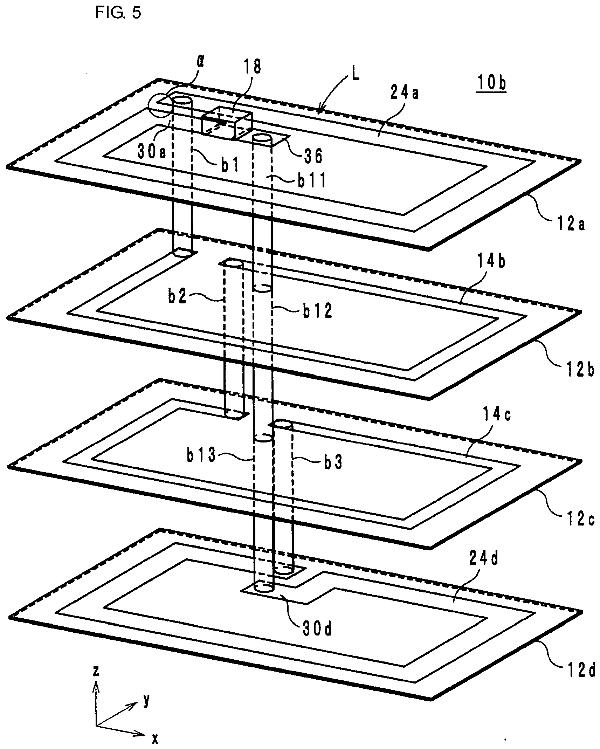

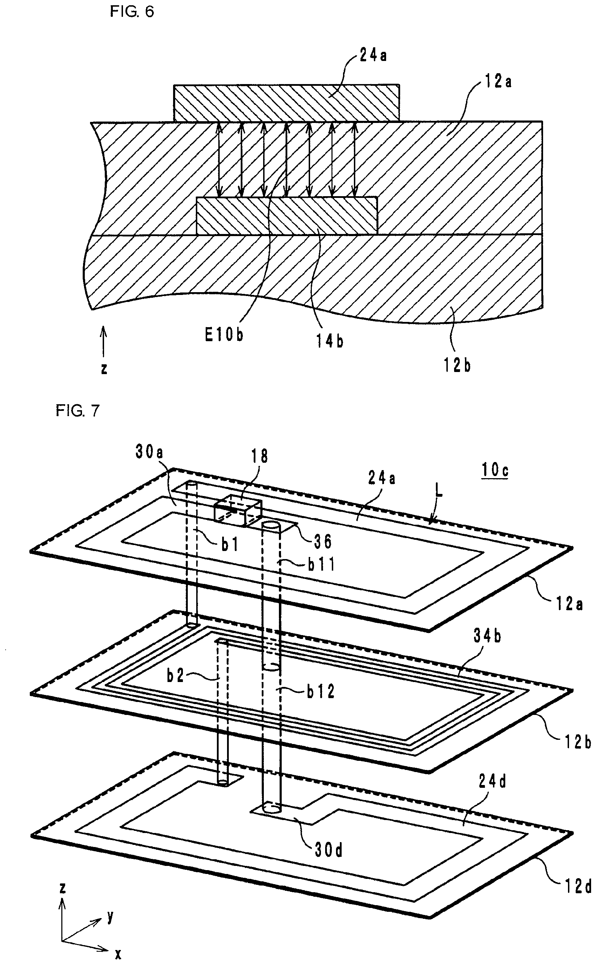

Hereafter, a wireless IC device according to a second embodiment of the present invention will be described with reference to the drawings. Fig. 5 is an exploded perspective view of a wireless IC device 10b according to the second embodiment. In Fig. 5, the x-axis extends in the direction of the long edges of the wireless IC device 10b, the γ-axis extends in the direction of the short edges of the wireless IC device 10b and the z-axis extends in a direction in which layers of the wireless IC device 10b are stacked. Fig. 6 is a sectional structural view of the wireless IC device 10b in the zy-plane. In addition, in Figs. 5 and 6, structures the same as those in Figs. 1 and 2 are denoted by the same reference symbols.

The difference between the wireless IC device 10a and the wireless IC device 10b is that the coil electrodes 14a and 14d are replaced with the coil electrodes 24a and 24d. In more detail, the line width of the coil electrodes 24a and 24d is formed so as to be larger than the line width of the coil electrodes 14a and 14b. Accordingly, the coil electrodes 24a and 24d, which are positioned at either end in the z-axis direction, have a line width that is larger than the line width of the coil electrodes 14b and 14c.

Furthermore, the coil electrodes 24a and 24d cover at least part of the other coil electrodes 14b and 14c in the line width direction when viewed in the plan from the z-axis direction. As an example, description will be made regarding the coil electrode 24a and the coil electrode 14b. As illustrated in Fig. 6, the coil electrode 14b is provided such that both ends thereof fit within the coil electrode 24a and do not protrude therefrom in the line width direction. Therefore, electric force lines ElOb generated between the coil electrode 24a and the coil electrode 14b are not likely to protrude to outside the coil electrode 24a when viewed in plan from the z-axis direction. As a result, as with the case described using Fig. 2(b), the electric force lines ElOb are not likely to pass through the person's hand even when the wireless IC device 10b is held by pinching the long edges or short edges thereof. As a result, varying of the resonant frequency with the condition of use of the wireless IC device 10b can be more advantageously suppressed.

In addition, it was described that the coil electrodes 24a and 24d cover at least part of the other coil electrodes 14b and 14c when viewed in plan in the z-axis direction. The phase "covers at least part of" means for example that the coil electrode 24a need not entirely cover the coil electrode 14b, since there is a portion (portion α in Fig. 5) above the coil electrode 14b in the z-axis direction in which the coil electrode 24a is not provided.

In addition, since other structures of the wireless IC device 10b are the same as those of the wireless IC device 10a, description thereof is omitted.

### Third Embodiment

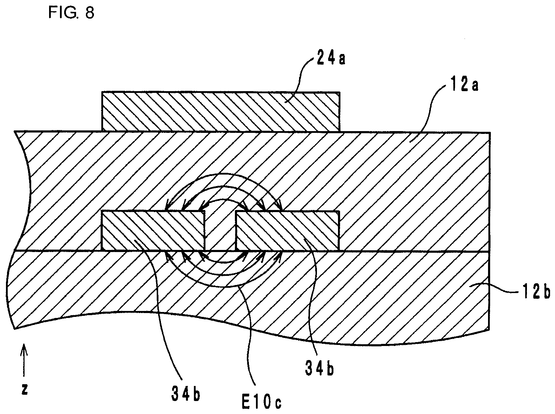

Hereafter, a wireless IC device according to a third embodiment of the present invention will be described with reference the drawings. Fig. 7 is an exploded perspective view of a wireless IC device 10c according to the third embodiment of the invention. In Fig. 7, the x-axis extends in the direction of the long edges of the wireless IC device 10c, the γ-axis extends in the direction of the short edges of the wireless IC device 10c and the z-axis extends in a direction in which layers of the wireless IC device 10c are stacked. Fig. 8 is a sectional structural view of the wireless IC device 10c in the zy-plane. In addition, in Figs. 7 and 8, structures the same as those in Figs. 5 and 6 are denoted by the same reference symbols.

The difference between the wireless IC device 10b and the wireless IC device 10c is that the insulating sheet 12c is not provided and the coil electrode 14b is replaced with a coil electrode 34b.

In more detail, in contrast to the wireless IC device 10b, which was formed by stacking four of the insulating sheets 12, the wireless IC device 10c is formed by stacking three of the insulating sheets 12, as illustrated in Fig. 7. Consequently, in the wireless IC device 10c, the number of coil electrodes 14 and 34 is one fewer than in the wireless IC device 10b. Accordingly, in the wireless IC device 10c, the number of turns of the antenna coil L of the wireless IC device 10c is made to be equal to the number of turns of the antenna coil L of the wireless IC device 10b by making the length of the coil electrode 34b be equal to two circuits.

In addition, since other structures of the wireless IC device 10c are the same as those of the wireless IC device 10b, description thereof will be omitted.

As described above, provided that the coil electrodes 24a and 24d, which are positioned at either end in the z-axis direction, loop through a length of less than one circuit about the coil axis of the antenna coil L, the coil electrode 34b, which is a coil electrode other than the coil electrodes 24a and 24d, may loop through a length of at least one circuit about the coil axis of the antenna coil L. As a result of the wireless IC device 10c having the above-described configuration, as will be described below, varying of the resonant frequency with the condition of use can be reduced and the number of turns of the antenna coil L can be made large even for a small number of stacked layers.

In more detail, since the coil electrode 34b loops a plurality of times about the coil axis as illustrated in Fig. 7, wires of the coil electrode 34b are side by side in a state in which they are close to each other on the insulating sheet 12b, as illustrated in Fig. 8. Therefore, when a current flows through the antenna coil L, electric force lines ElOc are generated up and down in the z-axis direction with respect to the coil electrode 34b.

However, since the coil electrode 34b is not a coil electrode positioned at either end in the z-axis direction, there is a sufficient distance from the coil electrode 34b to outside the wireless IC device 10c. Therefore, as illustrated in Fig. 8, the electric force lines E10c generated between wires of the coil electrode 34b negligibly protrude from the wireless IC device 10c. Therefore, in the case where the wireless IC device 10c is held in a person's hand, changing of the capacitance of the antenna coil L, due to the electric force lines E10c passing through the person's hand, is suppressed.

In particular, as illustrated in Fig. 8, the coil electrodes 24a and 24d cover at least part of the coil electrode 34b when viewed in plan from the z-axis direction, whereby, as will be described below, varying of the resonant frequency with the condition of use of the wireless IC device 10c can be more advantageously suppressed. In more detail, as illustrated in Fig. 8, the coil electrode 34b is provided such that both ends thereof fit inside the coil electrodes 24a and 24d (the coil electrode 24d is not illustrated in Fig. 8) so as not to protrude therefrom in the line width direction. Consequently, the electric force lines ElOc are blocked by the coil electrodes 24a and 24d and protruding of the electric force lines ElOc to outside the wireless IC device 10c is more advantageously suppressed. As a result, varying of the resonant frequency with the condition of use of the wireless IC device 10c can be more advantageously suppressed. In addition, since electric force lines generated between the coil electrode 24a and the coil electrode 34b are not likely to protrude to outside the coil electrode 24a, the same as in the first embodiment and the second embodiment, varying of the resonant frequency can be suppressed.

### Fourth Embodiment

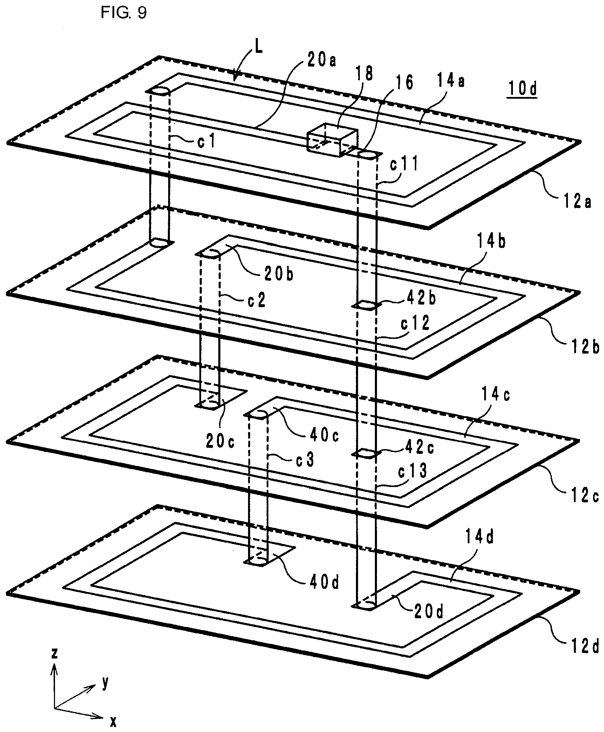

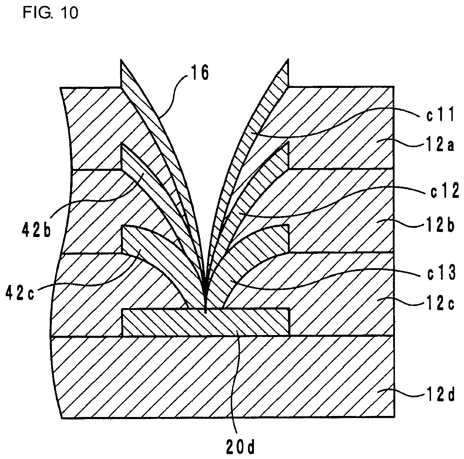

Hereafter, a wireless IC device according to a fourth embodiment of the present invention will be described with reference to the drawings. Fig. 9 is an exploded perspective view of a wireless IC device 10d according to the fourth embodiment. In Fig. 9, the x-axis extends in the direction of the long edges of the wireless IC device 10d, the γ-axis extends in the direction of the short edges of the wireless IC device 10d and the z-axis extends in a direction in which layers of the wireless IC device 10d are stacked. Fig. 10 is a sectional structural view of the vicinity of the connector 16 of the wireless IC device 10d in the zy-plane. In addition, in Figs. 9 and 10, structures the same as those in Figs. 1 and 2 are denoted by the same reference symbols.

The difference between the wireless IC device 10a and the wireless IC device 10d is that, in the wireless IC device 10d, instead of the coil electrodes 14 being connected to one another using the via hole conductors b, the coil electrodes 14 are connected to one another by using a pouching process. This difference will be described below.

A pouching process is a process for connecting two or more electrodes that oppose one another while sandwiching insulating sheets therebetween. Specifically, by pressing a needle or a blade through one electrode, a small hole is formed that extends through the one electrode and an insulating sheet. At this time, the one electrode is plastically deformed so as to extend to another electrode along the inner circumference of the hole. As a result, the two electrodes are connected with an insulating sheet sandwiched therebetween.

Here, in the pouching process, the insulating sheets 12 are penetrated with a needle. Accordingly, so as not damage the coil electrodes 14 that are not targets of the connection process, the wireless IC device 10d is provided with connectors 20b, 20c, 20d, 40c, 40d, 42b and 42c, as illustrated in Fig. 9.

In more detail, the connector 20b is connected to the coil electrode 14b and extends toward the inside of the coil electrode 14b so as not to be superposed with the coil electrodes 14a, 14c and 14d in the z-axis direction. The connector 20c is connected to the coil electrode 14c and extends toward the inside of the coil electrode 14c so as not to be superposed with the coil electrodes 14a, 14b and 14d in the z-axis direction. Ends of the connector 20b and the connector 20c are superposed with each other in the z-axis direction and are connected to each other through a connector c2 formed by performing the pouching process.

Furthermore, the connector 40c is connected to the coil electrode 14c and extends toward the inside of the coil electrode 14c so as not to be superposed with the coil electrodes 14a, 14b and 14d in the z-axis direction. The connector 40d is connected to the coil electrode 14d and extends toward the inside of the coil electrode 14d so as not to be superposed with the coil electrodes 14a, 14b and 14c in the z-axis direction. Ends of the connector 40c and the connector 40d are superposed with each other in the z-axis direction and are connected to each other through a connector c3 formed by performing the pouching process.

In addition, the connector 16 is connected to the wireless IC 18 on the insulating sheet 12a, which is positioned on the uppermost side in the z-axis direction. The connectors 42b and 42c are respectively provided on the insulating sheets 12b and 12c, which are insulating sheets other than the insulating sheets 12a and 12d positioned on the uppermost and lowermost sides in the z-axis direction, so as to be superposed with the connector 16 when viewed in plan from the z-axis direction. In addition, the connector 20d on the insulating sheet 12d, which is positioned on the lowermost side in the z-axis direction, is superposed with the connector 16 when viewed in plan from the z-axis direction and is connected to the coil electrode 14d. Then, the connectors 16, 42b, 42c and 20d are all connected together at the same position when viewed in plan from the z-axis direction through the connectors c11, c12 and c13 formed by the pouching process, as illustrated in Fig. 10.

In addition, other structures of the wireless IC device 10d are the same as those of the wireless IC device 10a and therefore description thereof will be omitted.

Similarly to as with the wireless IC device 10a, varying of the resonant frequency with the condition of use can be reduced with the above-described wireless IC device 10d.

Furthermore, in the wireless IC device 10d, the connectors 16, 42b, 42c and 20d are provided so as to be superposed with one another when viewed in plan from the z-axis direction. Therefore, the connectors can be connected to one another by performing the pouching process a single time. As a result, the number of processes used to manufacture the wireless IC device 10d can be reduced and the cost of manufacturing the wireless IC device 10d can be reduced.

### Fifth Embodiment

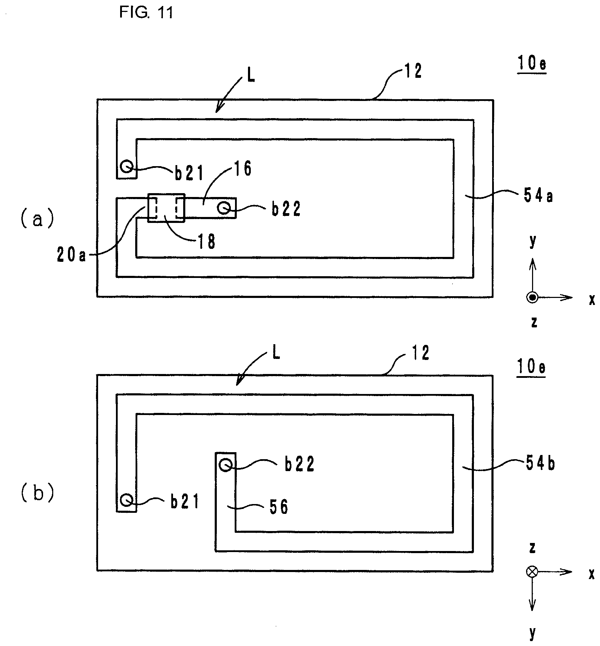

Hereafter, a wireless IC device according to a fifth embodiment of the present invention will be described with reference to the drawings. Fig. 11(a) is a top surface view of a wireless IC device 10e according to the fifth embodiment. Fig. 11(b) is a bottom surface view of the wireless IC device 10e according to the fifth embodiment. In Fig. 11, the x-axis extends in the direction of the long edges of the wireless IC device 10e, the γ-axis extends in the direction of the short edges of the wireless IC device 10e and the z-axis extends in a direction that is orthogonal to the x-axis and the γ-axis. Furthermore, in Fig. 11, structures that are the same as those in Fig. 1 are denoted by the same reference symbols.

It is not necessary for the wireless IC device according to this embodiment of the present invention to include a plurality of the insulating sheets 12, as has been described for the wireless IC devices 10a to 10d. In other words, as shown in the wireless IC device 10e illustrated in Fig. 11, a single insulating sheet 12 may be included. Hereafter, the wireless IC device 10e will be described.

The wireless IC device 10e is equipped with the insulating sheet 12, the connectors 16 and 20a, the wireless IC 18, coil electrodes 54a and 54b, a connector 56 and via hole conductors b21 and b22. The insulating sheet 12, the connectors 16 and 20a, and the wireless IC 18 are the same as the insulating sheet 12, the connectors 16 and 20a, and the wireless IC 18 of the wireless IC device 10a and therefore description thereof will be omitted.

The coil electrode 54a is formed on a main surface of the insulating sheet 12 on the upper side in the z-axis direction as illustrated in Fig. 11. The coil electrode 54b is formed on a main surface of the insulating sheet 12 on the lower side in the z-axis direction as illustrated in Fig. 11. In other words, the coil electrodes 54a and 54b are provided so as to sandwich the insulating sheet 12 therebetween. Then, the coil electrodes 54a and 54b are superposed with each other and thereby form a single ring when viewed in plan in the z-axis direction.

The connector 56 is connected to the coil electrode 54b and extends toward the inside of the coil electrode 54b. The via hole conductor b21 connects the coil electrode 54a and the coil electrode 54b to each other. The via hole conductor b22 connects the connector 16 and the connector 56 to each other.

Varying of the resonant frequency with the condition of use can be reduced with the above-described wireless IC device 10e, similarly to as with the wireless IC device 10a.

### Sixth Embodiment

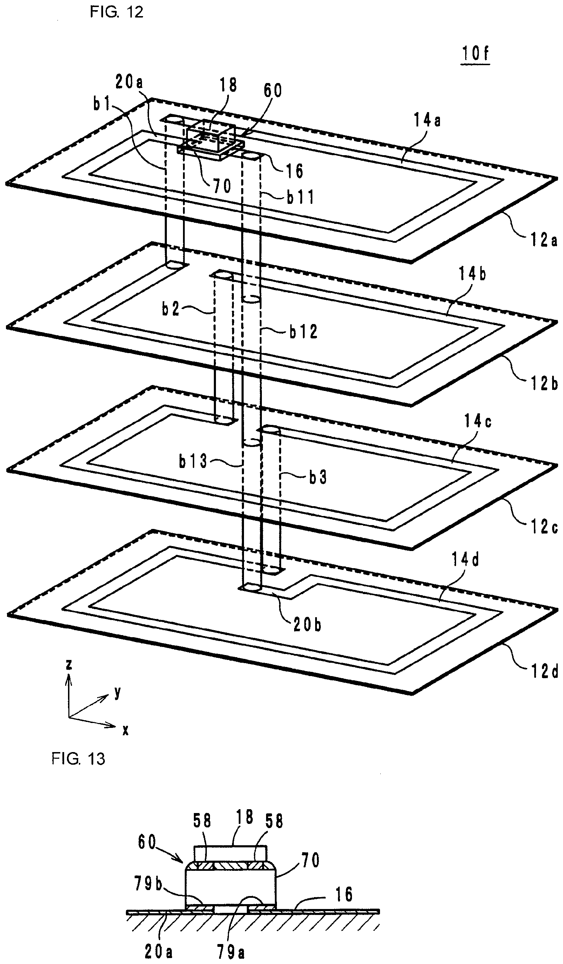

Hereafter, a wireless IC device according to a sixth embodiment of the present invention will be described with reference to the drawings. Fig. 12 is an exploded perspective view of a wireless IC device 10f according to the sixth embodiment. In Fig. 12, the x-axis extends in the direction of the long edges of the wireless IC device 10f, the γ-axis extends in the direction of the short edges of the wireless IC device 10f and the z-axis extends in a direction in which layers of the wireless IC device 10f are stacked. Fig. 13 is a sectional structural view of the vicinity of an electromagnetic coupling module 60 of the wireless IC device 10f in the xz-plane. In addition, in Figs. 12 and 13, structures the same as those in Figs. 1 and 2 are denoted by the same reference symbols.

In the wireless IC device 10f, as illustrated in Fig. 12, the wireless IC 18 is connected to the connectors 16 and 20a through a feeder circuit board 70, in contrast to in the wireless IC device 10a where the wireless IC 18 is directly connected to the connectors 16 and 20a. In the wireless IC device 10f, the wireless IC 18 and the feeder circuit board 70 form the electromagnetic coupling module 60.

In more detail, connection electrodes 58 are provided on the lower surface of the wireless IC 18, as illustrated in Fig. 13. The wireless IC 18 is mounted on the feeder circuit board 70 via the connection electrodes 58. The feeder circuit board 70 includes an inductance element, which is connected to the wireless IC 18 and is equipped with connection electrodes 79a and 79b on the lower surface thereof. The connection electrodes 79a and 79b are respectively connected to the connectors 16 and 20a.

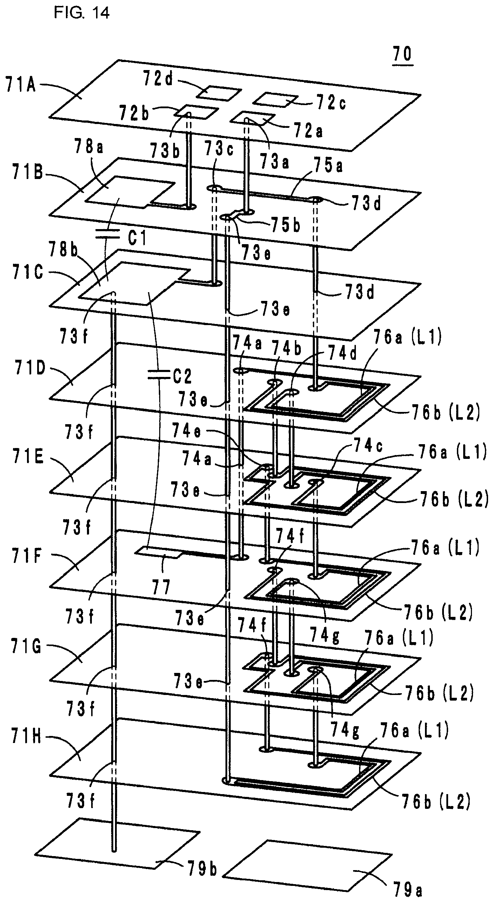

Next, the feeder circuit board 70 will be described in detail with reference to Fig. 14. Fig. 14 is an exploded perspective view of the feeder circuit board 70.

The feeder circuit board 70 is formed by stacking on top of one another, pressure bonding and baking ceramic sheets 71A to 71H composed of a dielectric. Connection electrodes 72a and 72b, electrodes 72c and 72d and via hole conductors 73a and 73b are formed on and through the sheet 71A; a capacitor electrode 78a, conductor patterns 75a and 75b, and via hole conductors 73c to 73e are formed on and through the ceramic sheet 71B; and a capacitor electrode 78b and via hole conductors 73d to 73f are formed on and through the ceramic sheet 71C. Furthermore, conductor patterns 76a and 76b and via hole conductors 73e, 73f, 74a, 74b and 74d are formed on and through the ceramic sheet 71D; conductor patterns 76a and 76b and via holes conductors 73e, 73f, 74a, 74c and 74e are formed on and through the ceramic sheet 71E; a capacitor electrode 77, conductor patterns 76a and 76b and via hole conductors 73e, 73f, 74f and 74g are formed on and through the ceramic sheet 71F; conductor patterns 76a and 76b and via hole conductors 73e, 73f, 74f and 74g are formed on and through the ceramic sheet 71G; and conductor patterns 76a and 76b and a via hole conductor 73f are formed on and through the ceramic sheet 71H.

The above-described ceramic sheets 71A to 71H are stacked on top of one another and thereby an inductance element L1 is formed by the conductor patterns 76a connected in a helical shape through the via hole conductors 74c, 74d and 74g; an inductance element L2 is formed by the conductor patterns 76b connected in a helical shape through the via hole conductors 74b, 74e and 74f; a capacitance element C1 is formed by the capacitor electrodes 78a and 78b; and a capacitance element C2 is formed by the capacitor electrodes 78b and 77.

One end of the inductance element L1 is connected to the capacitor electrode 78b through the via hole conductor 73d, the conductor pattern 75a and the via hole conductor 73c; and one end of the inductance element L2 is connected to the capacitor electrode 77 through the via hole conductor 74a. Furthermore, the other end the inductance element L1 and the other end of the inductance element L2 are joined with each other on the ceramic sheet 71H and are connected to the connection electrode 72a through the via hole conductor 73e, the conductor pattern 75b and the via hole conductor 73a. Furthermore, the capacitor electrode 78a is electrically connected to the connection electrode 72b through the via hole conductor 73b.

In addition, the connection electrodes 72a to 72d are connected to the wireless IC 18 through the connection electrode 58.

Furthermore, external electrodes 79a and 79b are provided on the bottom surface of the feeder circuit board 70 by coating conductor paste or the like, the external electrode 79a is coupled with the inductance elements L (L1 and L2) through a magnetic field, and the external electrode 79b is electrically connected to the capacitor electrode 78b through the via hole conductor 73f.

In addition, in this resonance circuit, the inductance elements L1 and L2 have a structure in which the two conductor patterns 76a and 76b are arranged so as to be parallel to each other. The two conductor patterns 76a and 76b have different line lengths and can take different resonant frequencies, and the frequency band of the wireless IC device can be broadened.

Furthermore, each of the ceramic sheets 71A to 71H may be a sheet composed of a magnetic ceramic material and the feeder circuit board 70 can be more easily obtained using a process of manufacturing a multilayer board such as a sheet lamination method or a thick film printing method used in the background art.

In addition, the ceramic sheets 71A to 71H, for example, may be formed as flexible sheets composed of a dielectric such as polyimide or a liquid-crystal polymer, electrodes and conductors may be formed on the sheets by a thick film forming method, these sheets may be made into a laminate by stacking the sheets on top of one another and subjecting them to thermocompression bonding or the like, and the inductance elements L1 and L2 and the capacitance elements C1 and C2 may be built thereinto.

In the feeder circuit board 70, the inductance elements L1 and L2 and the capacitance elements C1 and C2 are provided at different positions when viewed in plan, and the magnetic field generated by the inductance elements L1 and L2 is magnetically coupled to the external electrode 79a, and the external electrode 79b is one of the electrodes included in the capacitance element C1

Therefore, the electromagnetic coupling module 60 in which the wireless IC 18 is mounted on the feeder circuit board 70 receives high-frequency signals through the antenna coil L from a reader/writer, which is not illustrated, causes the resonance circuit magnetically coupled with the external electrodes 79a and 79b through the antenna coil L to resonate, and supplies only received signals of a predetermined frequency band to the wireless IC 18. However, a predetermined amount of energy is extracted from the received signal and this energy is used as a driving source. After being made to match a predetermined frequency in the resonance circuit, a signal of information stored in the wireless IC 18 is transmitted or transferred to the reader/writer through external electrodes 79a and 79b and the antenna coil L.

In the feeder circuit board 70, a resonant frequency characteristic is determined in the resonance circuit formed of the inductance elements L1 and L2 and the capacitance elements C1 and C2. The frequency of a signal from the antenna coil L is substantially determined by the self-resonance frequency of the resonance circuit.

In addition, other structures of the wireless IC device 10f are the same as those of the wireless IC device 10a and therefore description thereof will be omitted. Furthermore, the feeder circuit board 70 can also be applied to the wireless IC devices 10b to 10e, which are wireless IC devices other than the wireless IC device 10a.

Varying of the resonant frequency with the condition of use can be reduced with the above-described wireless IC device 10f, similarly to as with the wireless IC device 10a.

### Seventh Embodiment

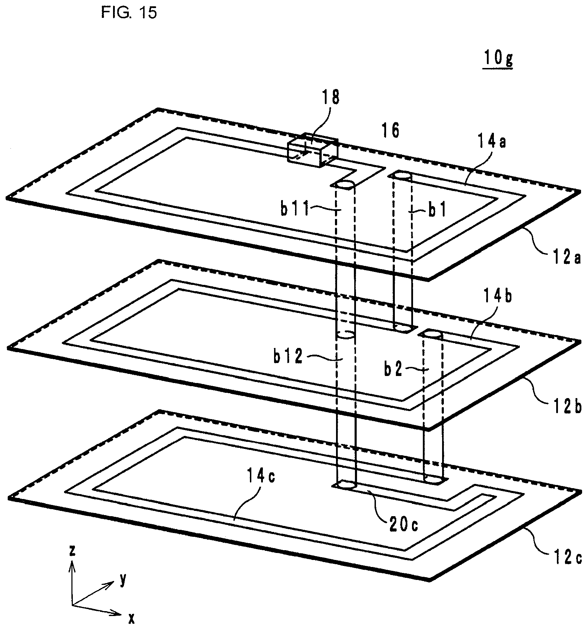

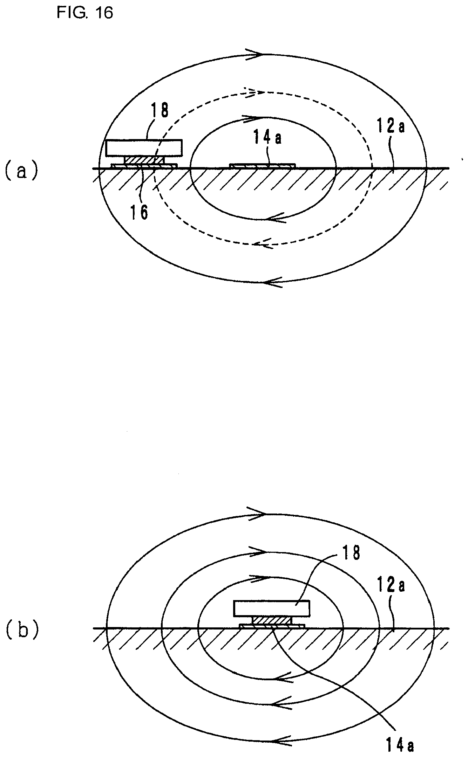

Hereafter, a wireless IC device according to a seventh embodiment of the present invention will be described with reference to the drawings. Fig. 15 is an exploded perspective view of a wireless IC device 10g according to the seventh embodiment. In Fig. 15, the x-axis extends in a direction of the long edges of the wireless IC device 10g, the γ-axis extends in a direction of the short edges of the wireless IC device 10g and the z-axis extends in a direction in which layers of the wireless IC device 10g are stacked. Fig. 16(a) is a sectional structural view of the vicinity of a wireless IC of a wireless IC device of a reference example in the zy-plane and Fig. 16(b) is a sectional structural view of the vicinity of the wireless IC 18 of the wireless IC device 10g in the zy-plane. In addition, in Figs. 15 and 16, structures that are the same as those in Figs. 1 and 2 are denoted by the same reference symbols.

The difference between the wireless IC device 10a and the wireless IC device 10g is that, in the wireless IC device 10g, the wireless IC 18 is provided so as to be superposed with a single ring formed by the plurality of coil electrodes 14a to 14c when viewed in plan from the z-axis direction. This difference will be described below.

In the wireless IC device 10g, as described above, the wireless IC 18 is provided so as to be superposed with the single ring formed by the plurality of coil electrodes 14a to 14c when viewed in plan from the z-axis direction. Consequently, the wireless IC 18 is connected to one end of the coil electrode 14a.

Furthermore, one end of the connector 16 is provided so as to be superposed with the single ring formed by the plurality of coil electrodes 14a to 14c and is connected to the wireless IC 18. The other end of the connector 16 is led out to the inside of the single ring and is connected to a connector 20c through the via hole conductors b11 and b12.

In addition, other structures of the wireless IC device 10g are the same as those of the wireless IC device 10a and therefore description thereof will be omitted.

Varying of the resonant frequency with the condition of use can be reduced with the above-described wireless IC device 10g, similarly to as with the wireless IC device 10a.

Furthermore, with the wireless IC device 10g, as will be described below, when the insulating sheets 12 are bent, the load acting on the wireless IC 18 can be suppressed. In more detail, since the insulating sheets 12 are flexible, the insulating sheets 12 sometimes bend when in use. Since the wireless IC 18 includes a semiconductor substrate, the wireless IC 18 is more rigid than the insulating sheets 12. Therefore, when the insulating sheets 12 are bent, stress is focused on the wireless IC 18 and on a portion connecting the wireless IC 18 and the antenna coil L and there is a risk of the wireless IC 18 breaking or of the wireless IC becoming disconnected from the antenna coil L.

Accordingly, in the wireless IC device 10g, the wireless IC 18 is provided so as to be superposed with the single ring formed by the coil electrodes 14a to 14c. The single ring does not readily bend compared with other components of the wireless IC device 10g, since the coil conductors 14a to 14c are superposed with one another. Consequently, even when the insulating sheets 12 bend, significant bending of the portion in which the wireless IC 18 is provided can be suppressed. As a result, the load acting on the wireless IC 18 and the portion connecting the wireless IC 18 and the antenna coil L can be suppressed.

Furthermore, with the wireless IC device 10g, as will be described below, magnetic field disturbance is not likely to be generated. In more detail, a magnetic field is generated so as to circulate around the coil electrodes 14. Therefore, if the wireless IC 18 were provided so as to be not superposed with the coils 14a to 14c when viewed in plan from the z-axis direction, as in the case of the wireless IC device of the reference example illustrated in Fig. 16(a), the magnetic field generated by the coil electrodes 14 would be disturbed. In other words, in the wireless IC device the reference example, magnetic flux disturbance is generated.

In contrast, in the wireless IC device 10g, the wireless IC 18 is provided so as to be superposed with the coil electrodes 14a to 14c when viewed in plan from the z-axis direction. Consequently, as illustrated in Fig. 16(b), the magnetic field is generated so as to circulate around the coil electrodes 14a to 14c and the wireless IC device 18. Therefore, the wireless IC 18 does disturb the magnetic field. As a result, with the wireless IC device 10g, magnetic field disturbance is not likely to be generated.

### Other Embodiments

Wireless IC devices according to embodiments of the present invention are not limited to the above-described wireless IC devices 10a to 10g according to the first to seventh embodiments and can be modified within the scope of the claims of the invention.

Furthermore, the phrase "the coil electrode 14 has a length less than one circuit" means that the coil electrode 14 has a length substantially less than one circuit. Therefore, it is permitted that the length of the coil electrode 14 slightly exceed one circuit so long as the resonant frequency of the wireless IC device 10 does not vary with the condition of use.

In addition, although touching of the wireless IC device 10 by a person's hand was described as being the cause of varying of the resonant frequency, causes of varying of the resonant frequency are not limited to this. For example, in the case where the wireless IC device 10 is used after being inserted into a card case or the like, the resonant frequency will vary due to the fact that the card case or the like is touching the wireless IC device 10.

Furthermore, it is not necessary for the shape of the insulating sheet 12 to be a rectangular shape, but it is desirable that large holes, cut-out portions or the like not be formed inside the antenna coil L. This is because, if large holes, cut-out portions or the like are provided in the insulating sheet 12 inside the antenna coil L, there is a risk of, for example, the electric force lines ElOa passing through the person's hand through the holes or cut-out portions when the person's finger Fin3 approaches from the left side of Fig. 2(b).

In addition, in the wireless IC devices 10a to 10g, the coil electrodes 14, 24 and 34 are provided so as to coincide with one another in the line-width direction when viewed in plan from the z-axis direction. However, the coil electrodes 14, 24, and 34 on the lower side in the z-axis direction may slightly protrude with respect to the coil electrodes 14, 24 and 34 on the upper side in the z-axis direction when viewed in plan from the z-axis direction. However, it is necessary that the coil electrodes 14, 24 and 34 only protrude by an amount that does not affect the resonant frequency.

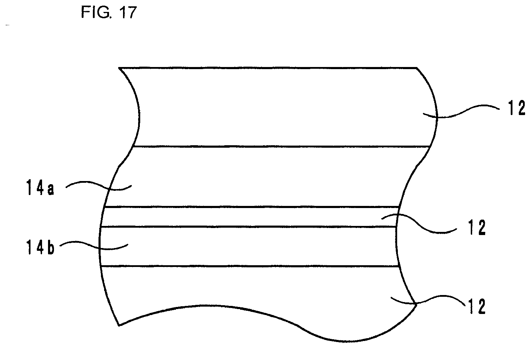

In particular, in the case where these coil electrodes 14, 24 and 34 are arranged so as to be staggered with respect to one another, as in the enlarged view of the coil electrode 14a of the wireless IC device 10a illustrated in Fig. 17, when viewed in plan from the z-axis direction, the coil electrode 14a, which is positioned on the uppermost side in the z-axis direction, sandwiches the insulating sheet 12 in a through region of the ring formed by the coil electrodes 14a to 14d, and the coil electrodes 14a to 14d are separated from one another and must not be side by side with one another. This is because electric force lines are generated between the coil electrodes 14 that protrude to outside the wireless IC device 10a when the coil electrodes 14 are side by side as in Fig. 17. Furthermore, for the same reason, the coil electrode 14d, which is positioned lowermost in the z-axis direction when viewed in plan from the z-axis direction, sandwiches the insulating sheet 12 in the interior of the ring formed by the coil electrodes 14a to 14d and the coil electrodes 14a to 14d are separated from one another and must not be side by side with one another. In addition, in Fig. 17, the wireless IC device 10a has been described as an example, but the same can be said about the wireless IC devices 10b to 10g.

### Method of Manufacturing Wireless IC Device

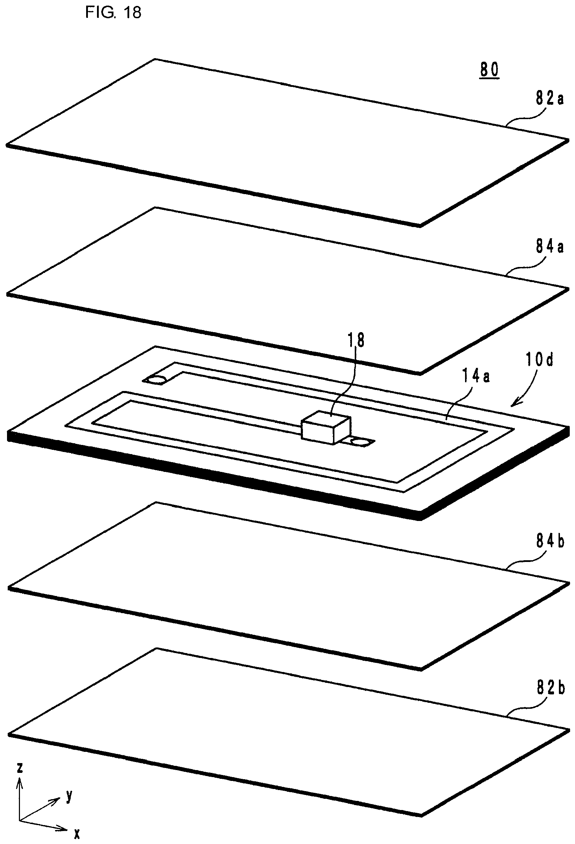

A method of manufacturing a wireless IC device according to an embodiment of the present invention will be described with reference to the drawings. Hereafter, a method of manufacturing the wireless IC device 10d, as an example of a wireless IC device according to an embodiment of the present invention, will be described. In addition, a method of manufacturing a wireless IC card 80, to which the wireless IC device 10d has been applied, will be described. Fig. 18 is an exploded perspective view of the wireless IC card 80.

The insulating sheets 12 composed of for example a glass epoxy substrate, polyimide, polyvinyl chloride, polyethylene terephthalate (PET), PET-G or a liquid crystal polymer resin are prepared. On the respective insulating sheets 12, the coil electrodes 14 illustrated in Fig. 9 are formed. In the case where the coil electrodes 14 are composed of copper foil, the coil electrodes 14 are formed by using for example an etching process.

Furthermore, simultaneously with forming the coil electrodes 14, the connectors 16, 20a, 20b, 20c, 20d, 40c, 40d, 42b and 42c are also formed by using for example an etching process. In more detail, on the insulating sheet 12a, the connector 20a, which is connected to the coil electrode 14a, is formed and the connector 16 is formed at a position separated from the connector 20a by exactly an area in which the wireless IC 18 is to be mounted. Furthermore, in the case where the insulating sheets 12a to 12d are stacked on top of one another, the connectors 42b and 42c are formed on the insulating sheets 12b and 12c so as to be superposed with the connector 16 when viewed in plan from the z-axis direction. Furthermore, simultaneously with forming the connectors 42b and 42c, the connectors 20b and 20c, which are connected to the coil electrodes 14b and 14c are also formed on the insulating sheets 12b and 12c. In addition, the connector 20d, which is connected to the coil electrode 14d, is also formed on the insulating sheet 12d and is superposed with the connector 16 when viewed in plan from the z-axis direction. Simultaneously with forming the connector 20d, the connector 40d, which is connected to the coil electrode 14d, is also formed on the insulating sheet 12d.

In addition, the coil electrodes 14a to 14d and the connectors 16, 20a, 20b, 20c, 20d, 40c, 40d, 42b and 42c can also be formed by using a screen printing method in which a conductive paste is applied.

Next, the plurality of insulating sheets 12a to 12d are aligned and stacked on top of one another such that the plurality of coil electrodes 14a to 14d are superposed with one another and thereby form a single ring when viewed in plan from the z-axis direction. At this time, the connectors 16, 42b, 42c and 20d are also superposed with one another when viewed in plan from the z-axis direction. Once stacking of the insulating sheets 12a to 12d is complete, the insulating sheets 12a to 12d are heated and pressure bonded.

Next, the coil electrode 14a and the coil electrode 14b; the connector 20b and the connector 20c; the connector 40c and the connector 40d; and the connector 16, the connector 42b, the connector 42c and the connector 20d are connected to one another at four places by using a pouching process. At this time, since the connector 16, the connector 42b, the connector 42c and the connector 20d are superposed with one another when viewed in plan from the z-axis direction, they are connected together by performing the pouching process a single time.

Next, the wireless IC 18 is mounted on the connectors 16 and 20a of the insulating sheet 12a. Specifically, the wireless IC 18 is mounted by performing a flip chip mounting process in which an anisotropic conductive film (ACF) is used. At this time, after the wireless IC 18 has been aligned and temporarily affixed so as to be connected to the connectors 16 and 20a, hot pressing is performed so as to attach the wireless IC 18. By performing the above process, the wireless IC device 10d is completed.

Once the wireless IC device 10d has been completed, as illustrated in Fig. 18, the wireless IC card 80 is manufactured by attaching overlay sheets 82a and 82b by using adhesive sheets 84a and 84b. In more detail, the adhesive sheet 84a and the overlay sheet 82a are stacked on the upper side of the wireless IC device 10d in the z-axis direction and the adhesive sheet 84b and the overlay sheet 82b are stacked on the lower side of the wireless IC device 10d. Then, heating and pressure bonding are performed. Thus, the wireless IC card 80 is completed.

In addition, in the method of manufacturing a wireless IC device, a method of manufacturing the wireless IC device 10d was described, but the wireless IC devices 10a to 10c can be manufactured by using substantially the same manufacturing method. However, in the wireless IC devices 10a to 10c, the coil electrodes 14, 24 and 34 are connected to one another not by using a pouching process but by using the via hole conductors b. Therefore, a step of forming the via hole conductors b in the respective insulating sheets 12 is performed instead of the step of carrying out the pouching process. The via hole conductors b are formed by irradiating the insulating sheets 12 with a laser beam to form via holes and then filling the via holes with a conductive paste. In particular, in the case where the coil electrodes 14, 24 and 34 are formed by a screen printing method, simultaneously with the step of filling the via holes with the conductive paste, the coil electrodes 14, 24 and 34 can be formed by applying the conductive paste to the insulating sheets 12.

In addition, when manufacturing the wireless IC device 10f, the electromagnetic coupling module 60, which is composed of the wireless IC 18 and the feeder circuit board 70, is mounted instead of the wireless IC 18.

### Industrial Applicability

The present invention is of use in wireless IC devices and methods of manufacturing wireless IC devices, and is particularly excellent in that varying of a resonant frequency with the condition of use can be reduced.

## Claims

1. A wireless integrated circuit, IC, device comprising:
an insulating sheet that includes a plurality of stacked layers (12a-12d);
a plurality of coil electrodes (14a-14d) that form an antenna coil, L, by being provided so as to sandwich the insulating sheet (12a-12d) therebetween and be connected to one another;
wherein the plurality of coil electrodes (14a-14d) are superposed with one another and thereby form a single ring when viewed in plan from a direction extending substantially perpendicular to a direction in which a main surface of the insulating sheet extends,
**characterized in that** a minimum value of a distance, D1, between an outer edge of the ring and outer edges of the insulating sheet is larger than a distance, D2, in the direction extending substantially perpendicular to the direction in which the main surface of the insulating sheet extends between the plurality of coil electrodes (14a-14d).

2. The wireless IC device of claim 1,
wherein the coil electrodes (24a, 24d) positioned at both ends in the direction extending substantially perpendicular to the direction in which the main surface of the insulating sheet extends have a larger line width than other coil electrodes (14b, 14c).

3. A method of manufacturing a wireless integrated circuit, IC, device, comprising:
a step of forming coil electrodes (14a-14d) on a plurality of insulating sheets (12a-12d); and
a step of stacking the plurality of insulating sheets (12a-12d) on top of one another so that the coil electrodes (14a-14d) are superposed with one another and thereby form a single ring when viewed in plan from a direction extending substantially perpendicular to a direction in which the main surface of the insulating sheets (12a-12d) extend,
**characterized by** forming the coil electrodes (14a-14d) and stacking the insulating sheets (12a-12d) so that a minimum value of a distance, D1, between an outer edge of the ring and outer edges of the insulating sheets (12a-12d) is larger than a distance, D2, in the direction extending substantially perpendicular to the direction in which the main surface of the insulating sheets extends between the plurality of coil electrodes (14a-14d).

4. The method of claim 3, further comprising:
forming the coil electrodes (14b, 14c, 24a, 24d) and stacking the insulating sheets (12a-12d) so that the coil electrodes (24a, 24d) positioned at both ends in the direction in which the main surface of the insulating sheet extends have a larger line width than other coil electrodes (14b, 14c).

5. The wireless IC device according to claim 1 or 2,
wherein the coil electrodes positioned at both ends in the direction extending substantially perpendicular to the direction in which the main surface of the insulating sheets extends loop through a length of less than one circuit around a coil axis of the coil antenna.

6. The wireless IC device according to claim 1 or 2,
wherein the coil electrodes positioned at both ends in the direction extending substantially perpendicular to the direction in which the main surface of the insulating sheet extends cover at least part of the other coil electrodes when viewed in plan from the direction extending substantially perpendicular to the direction in which the main surface of the insulating sheet extends.

7. The wireless IC device according to any one of claims 1, 2, 5, or 6,
wherein the coil electrodes other than those positioned at both ends in the direction extending substantially perpendicular to the direction in which the main surface of the insulating sheet extends loop through a length of at least one circuit around the coil axis.

8. The wireless IC device according to any one of claims 1, 2, 5, 6, or 7,
further comprising:
a wireless IC (18) that is connected to the antenna coil, L, and processes transmission and reception signals.

9. The wireless IC device according to claim 8, further comprising:
a first connector that is connected to the wireless IC and is connected to the coil electrode on the insulating sheet positioned on an uppermost side in the direction extending substantially perpendicular to the direction in which the main surface of the insulating sheet extends;
a second connector that is connected to the wireless IC on the insulating sheet that is positioned on the uppermost side in the direction extending substantially perpendicular to the direction in which the main surface of the insulating sheet extends;
a third connector that is provided on one of the insulating sheets other than the insulating sheets positioned on the uppermost side and on a lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends; and
a fourth connector that is connected to the coil electrode on an insulating sheet positioned on a a lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends;
wherein the first connector, the second connector, the third connector and the fourth connector are connected to one another at the same position when viewed in plan from the direction extending substantially perpendicular to the direction in which the main surface of the insulating sheet extends.

10. The wireless IC device according to any one of claims 1, 5, 6, or 7, further comprising:
an electromagnetic coupling module that includes a wireless IC that processes transmission and reception signals and a feeder circuit board having an inductance element that is connected to the wireless IC and is connected to the antenna coil.

11. The wireless IC device according to claim 10, further comprising:
a first connector that is connected to the feeder circuit board and the coil electrode on the insulating sheet that is positioned on an uppermost side in the direction extending substantially perpendicular to the direction in which the main surface of the insulating sheet extends;
a second connector that is connected to the feeder circuit board on the insulating sheet that is positioned on an uppermost side in the direction extending substantially perpendicular to the direction in which the main surface of the insulating sheet extends;
a third connector that is provided on one of the insulating sheets other than the insulating sheets positioned on the uppermost side and a lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends; and
a fourth connector that is connected to the coil electrode on the insulating sheet positioned on the lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends;
wherein the first connector, the second connector, the third connector and the fourth connector are connected to one another at a same position when viewed in plan from the direction extending substantially perpendicular to the direction in which the main surface of the insulating sheet extends.

12. The wireless IC device according to claim 8,
wherein the wireless IC is provided so as to be superposed with a single ring formed by the plurality of coil electrodes when viewed in plan from the direction extending substantially perpendicular to the direction in which the main surface of the insulating sheet extends.

13. The wireless IC device according to any one of claims 1, 2, or 5 to 11, further comprising:
a connection conductor that is provided at a position superposed with the coil electrodes positioned at both ends in the direction extending substantially perpendicular to the direction in which the main surface of the insulating sheet extends when viewed in plan from the direction extending substantially perpendicular to the direction in which the main surface of the insulating sheet extends and that connects the plurality of coil electrodes to one another.

14. The wireless IC device according to any one of claims 1, 2, or 5 to 12, wherein the coil electrode positioned on an uppermost side or the coil electrode positioned on a lowermost side in the direction extending substantially perpendicular to the direction in which the main surface of the insulating sheet extends is separated from and is not side by side with the coil electrodes in a through region of the ring.

15. The method of manufacturing the wireless IC device according to claim 3 or 4, further comprising:
a step of forming a first connector that is connected to the coil electrode on the insulating sheet that is positioned on an uppermost side in the direction extending substantially perpendicular to the direction in which the main surface of the insulating sheet extends;
a step of forming a second connector on the insulating sheet that is positioned on the uppermost side in the direction extending substantially perpendicular to the direction in which the main surface of the insulating sheet extends;
a step of forming a third connector on one of the insulating sheets other than the insulating sheets positioned on the uppermost side and a lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends;
a step of forming a fourth connector that is connected to the coil electrode on the insulating sheet positioned on the lowermost side in the direction extending substantially perpendicular to the direction in which the main surface of the insulating sheet extends and that is superposed with the second connector when viewed in plan from the direction extending substantially perpendicular to the direction in which the main surface of the insulating sheet extends; and
a step of connecting the first connector, the second connector, the third connector and the fourth connector together, after stacking the plurality of insulating sheets on top of one another.

## Patentansprüche

1. Ein Drahtlos-lntegrierte-Schaltung(IC)-Bauelement, das folgende Merkmale aufweist:
eine Isolierlage, die eine Mehrzahl von gestapelten Schichten (12a-12d) umfasst;
eine Mehrzahl von Spulenelektroden (14a-14d), die eine Antennenspule bilden, indem dieselben dahin gehend bereitgestellt werden, die Isolierlage (12a-12d) dazwischen einzuklemmen und miteinander verbunden zu sein;
wobei die Mehrzahl von Spulenelektroden (14a-14d) miteinander überlagert sind und dadurch bei Betrachtung in einer Draufsicht aus einer Richtung, die sich im Wesentlichen senkrecht zu einer Richtung erstreckt, in der sich eine Hauptoberfläche der Isolierlage erstreckt, einen einzelnen Ring bilden,
**dadurch gekennzeichnet, dass** ein Mindestabstandswert D1 zwischen einem Au-ßenrand des Ringes und Außenrändern der Isolierlage größer ist als ein Abstand D2 in der Richtung, die sich im Wesentlichen senkrecht zu der Richtung erstreckt, in der sich die Hauptoberfläche der Isolierlage zwischen der Mehrzahl von Spulenelektroden (14a-14d) erstreckt.

2. Das Drahtlos-IC-Bauelement gemäß Anspruch 1,
bei dem die Spulenelektroden (24a-24d), die an beiden Enden in der Richtung positioniert sind, die sich im Wesentlichen senkrecht zu der Richtung erstreckt, in der sich die Hauptoberfläche der Isolierlage erstreckt, eine größere Leitungsbreite aufweisen als andere Spulenelektroden (14b, 14c).

3. Ein Verfahren zum Herstellen eines Drahtlos-lntegrierte-Schaltung(IC)-Bauelements, das folgende Schritte aufweist:
einen Schritt eines Bildens von Spulenelektroden (14a-14d) auf einer Mehrzahl von Isolierlagen (12a-12d); und
einen Schritt eines Stapelns der Mehrzahl von Isolierlagen (12a-12d) aufeinander, so dass die Spulenelektroden (14a-14d) miteinander überlagert sind und dadurch bei Betrachtung in einer Draufsicht aus einer Richtung, die sich im Wesentlichen senkrecht zu einer Richtung erstreckt, in der sich die Hauptoberfläche der Isolierlagen (12a-12d) erstreckt, einen einzelnen Ring bilden,
**gekennzeichnet durch** Bilden der Spulenelektroden (14a-14d) und Stapeln der Isolierlagen (12a-12d), so dass ein Mindestabstandswert D1 zwischen einem Au-ßenrand des Ringes und Außenrändern der Isolierlagen (12a-12d) größer ist als ein Abstand D2 in der Richtung, die sich im Wesentlichen senkrecht zu der Richtung erstreckt, in der sich die Hauptoberfläche der Isolierlagen zwischen der Mehrzahl von Spulenelektroden (14a-14d) erstreckt.

4. Das Verfahren gemäß Anspruch 3, das ferner folgenden Schritt aufweist:
Bilden der Spulenelektroden (14b, 14c, 24a, 24d) und Stapeln der Isolierlagen (12a-12d), so dass die Spulenelektroden (24a, 24d), die an beiden Enden in der Richtung positioniert sind, in der sich die Hauptoberfläche der Isolierlage erstreckt, eine größere Leitungsbreite aufweisen als andere Spulenelektroden (14b, 14c).

5. Das Drahtlos-IC-Bauelement gemäß Anspruch 1 oder 2,
bei dem sich die Spulenelektroden, die an beiden Enden in der Richtung positioniert sind, die sich im Wesentlichen senkrecht zu der Richtung erstreckt, in der sich die Hauptoberfläche der Isolierlagen erstreckt, um eine Länge von weniger als einer Schaltung um eine Spulenachse der Spulenantenne in Schleife legen.

6. Das Drahtlos-IC-Bauelement gemäß Anspruch 1 oder 2,
bei dem die Spulenelektroden, die an beiden Enden in der Richtung positioniert sind, die sich im Wesentlichen senkrecht zu der Richtung erstreckt, in der sich die Hauptoberfläche der Isolierlage erstreckt, bei Betrachtung in einer Draufsicht aus der Richtung, die sich im Wesentlichen senkrecht zu der Richtung erstreckt, in der sich die Hauptoberfläche der Isolierlage erstreckt, zumindest einen Teil der anderen Spulenelektroden bedecken.

7. Das Drahtlos-IC-Bauelement gemäß einem der Ansprüche 1, 2, 5 oder 6,
bei dem sich die Spulenelektroden außer denjenigen, die an beiden Enden in der Richtung positioniert sind, die sich im Wesentlichen senkrecht zu der Richtung erstreckt, in der sich die Hauptoberfläche der Isolierlage erstreckt, um eine Länge von zumindest einer Schaltung Kreis um die Spulenachse in Schleife legen.

8. Das Drahtlos-IC-Bauelement gemäß einem der Ansprüche 1, 2, 5, 6 oder 7, das ferner Folgendes aufweist:
eine Drahtlos-IC (18), die mit der Spulenantenne, L, verbunden ist und Übertragungs- und Empfangssignale verarbeitet.

9. Das Drahtlos-IC-Bauelement gemäß Anspruch 8, das ferner Folgendes aufweist:
einen ersten Verbinder, der mit der Drahtlos-IC verbunden ist und mit der Spulenelektrode auf der Isolierlage verbunden ist, die auf einer am weitesten oben gelegenen Seite in der Richtung positioniert ist, die sich im Wesentlichen senkrecht zu der Richtung erstreckt, in der sich die Hauptoberfläche der Isolierlage erstreckt;
einen zweiten Verbinder, der mit der Drahtlos-IC auf der Isolierlage verbunden ist, die auf der am weitesten oben gelegenen Seite in der Richtung positioniert ist, die sich im Wesentlichen senkrecht zu der Richtung erstreckt, in der sich die Hauptoberfläche der Isolierlage erstreckt;
einen dritten Verbinder, der auf einer der Isolierlagen außer den Isolierlagen bereitgestellt ist, die auf der am weitesten oben gelegenen Seite und auf einer am weitesten unten gelegenen Seite in der Richtung positioniert sind, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist; und
einen vierten Verbinder, der mit der Spulenelektrode auf einer Isolierlage verbunden ist, die auf einer am weitesten unten gelegenen Seite in der Richtung positioniert ist, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist;
wobei der erste Verbinder, der zweite Verbinder, der dritte Verbinder und der vierte Verbinder bei Betrachtung in einer Draufsicht aus der Richtung, die sich im Wesentlichen senkrecht zu der Richtung erstreckt, in der sich die Hauptoberfläche der Isolierlage erstreckt, an derselben Position verbunden sind.

10. Das Drahtlos-IC-Bauelement gemäß einem der Ansprüche 1, 5, 6 oder 7, das ferner Folgendes aufweist:
ein elektromagnetisches Kopplungsmodul, das eine Drahtlos-IC, welche Übertragungs- und Empfangssignale verarbeitet, und eine Speiseschaltungsplatine umfasst, die ein Induktivitätselement aufweist, das mit der Drahtlos-IC verbunden ist und das mit der Antennenspule verbunden ist.

11. Das Drahtlos-IC-Bauelement gemäß Anspruch 10, das ferner Folgendes aufweist:
einen ersten Verbinder, der mit der Speiseschaltungsplatine und der Spulenelektrode auf der Isolierlage verbunden ist, die am weitesten oben in der Richtung positioniert ist, die sich im Wesentlichen senkrecht zu der Richtung erstreckt, in der sich die Hauptoberfläche der Isolierlage erstreckt;
einen zweiten Verbinder, der mit der Speiseschaltungsplatine auf der Isolierlage verbunden ist, die auf einer am weitesten oben gelegenen Seite in der Richtung positioniert ist, die sich im Wesentlichen senkrecht zu der Richtung erstreckt, in der sich die Hauptoberfläche der Isolierlage erstreckt;
einen dritten Verbinder, der auf einer der Isolierlagen außer den Isolierlagen bereitgestellt ist, die auf der am weitesten oben gelegenen Seite und einer am weitesten unten gelegenen Seite in der Richtung positioniert sind, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist; und
einen vierten Verbinder, der mit der Spulenelektrode auf der Isolierlage verbunden ist, die auf der am weitesten unten gelegenen Seite in der Richtung positioniert ist, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist;
wobei der erste Verbinder, der zweite Verbinder, der dritte Verbinder und der vierte Verbinder bei Betrachtung in einer Draufsicht aus der Richtung, die sich im Wesentlichen senkrecht zu der Richtung erstreckt, in der sich die Hauptoberfläche der Isolierlage erstreckt, an einer gleichen Position miteinander verbunden sind.

12. Das Drahtlos-IC-Bauelement gemäß Anspruch 8, bei dem die Drahtlos-IC dahin gehend bereitgestellt ist, mit einem einzelnen Ring überlagert zu sein, der bei Betrachtung in einer Draufsicht aus der Richtung, die sich im Wesentlichen senkrecht zu der Richtung erstreckt, in der sich die Hauptoberfläche der Isolierlage erstreckt, durch die Mehrzahl von Spulenelektroden gebildet ist.

13. Das Drahtlos-IC-Bauelement gemäß einem der Ansprüche 1, 2 oder 5 bis 11, das ferner Folgendes aufweist:
einen Verbindungsleiter, der an einer Position bereitgestellt ist, die mit den Spulenelektroden überlagert ist, die an beiden Enden in der Richtung positioniert sind, die sich im Wesentlichen senkrecht zu der Richtung erstreckt, in der sich die Hauptoberfläche der Isolierlage bei Betrachtung in einer Draufsicht aus der Richtung erstreckt, die sich im Wesentlichen senkrecht zu der Richtung erstreckt, in der sich die Hauptoberfläche der Isolierlage erstreckt, und der die Mehrzahl von Spulenelektroden miteinander verbindet.

14. Das Drahtlos-IC-Bauelement gemäß einem der Ansprüche 1, 2, oder 5 bis 12, bei dem die Spulenelektrode, die auf einer am weitesten oben gelegenen Seite positioniert ist, oder die Spulenelektrode, die auf einer am weitesten unten gelegenen Seite positioniert ist, in der Richtung, die sich im Wesentlichen senkrecht zu der Richtung erstreckt, in der sich die Hauptoberfläche der Isolierlage erstreckt, von den Spulenelektroden in einem Durchgangsbereich des Ringes getrennt ist und nicht Seite an Seite mit diesen liegt.

15. Das Verfahren zum Herstellen des Drahtlos-IC-Bauelementes gemäß Anspruch 3 oder 4, das ferner folgende Schritte aufweist:
einen Schritt eines Bildens eines ersten Verbinders, der mit der Spulenelektrode auf der Isolierlage verbunden ist, die auf einer am weitesten oben gelegenen Seite in der Richtung positioniert ist, die sich im Wesentlichen senkrecht zu der Richtung erstreckt, in der sich die Hauptoberfläche der Isolierlage erstreckt;
einen Schritt eines Bildens eines zweiten Verbinders auf der Isolierlage, die auf der am weitesten oben gelegenen Seite in der Richtung positioniert ist, die sich im Wesentlichen senkrecht zu der Richtung erstreckt, in der sich die Hauptoberfläche der Isolierlage erstreckt;
einen Schritt eines Bildens eines dritten Verbinders auf einer der Isolierlagen außer den Isolierlagen, die auf der am weitesten oben gelegenen Seite und einer am weitesten unten gelegenen Seite in der Richtung positioniert sind, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist;
einen Schritt eines Bildens eines vierten Verbinders, der mit der Spulenelektrode auf der Isolierlage verbunden ist, die auf der am weitesten unten gelegenen Seite in der Richtung positioniert ist, die sich im Wesentlichen senkrecht zu der Richtung erstreckt, in der sich die Hauptoberfläche der Isolierlage erstreckt, und der bei Betrachtung in einer Draufsicht aus der Richtung, die sich im Wesentlichen senkrecht zu der Richtung erstreckt, in der sich die Hauptoberfläche der Isolierlage erstreckt, mit dem zweiten Verbinder überlagert ist; und
einen Schritt eines Verbindens des ersten Verbinders, des zweiten Verbinders, des dritten Verbinders und des vierten Verbinders miteinander, nach dem Stapeln der Mehrzahl von Isolierlagen aufeinander.

## Revendications

1. Dispositif à circuit intégré CI sans fil comprenant :
une feuille isolante qui comprend une pluralité de couches empilées (12a-12d) ;
une pluralité d'électrodes de bobine (14a-14d) qui forment une bobine d'antenne L, en étant prévues afin de prendre en sandwich la feuille isolante (12a-12d) entre elles et être raccordées les unes aux autres ;
dans lequel la pluralité d'électrodes de bobine (14a-14d) sont superposées les unes sur les autres et forment ainsi un seul anneau, lorsqu'elles sont observées en plan à partir d'une direction s'étendant sensiblement perpendiculairement à une direction dans laquelle une surface principale de la feuille isolante s'étend,
**caractérisé en ce qu'**une valeur minimum d'une distance D1 entre un bord externe de l'anneau et les bords externes de la feuille isolante est supérieure à une distance D2 dans la direction s'étendant sensiblement perpendiculairement à la direction dans laquelle la surface principale de la feuille isolante s'étend entre la pluralité d'électrodes de bobine (14a-14d).

2. Dispositif à CI sans fil selon la revendication 1,
dans lequel les électrodes de bobine (24a, 24d) positionnées aux deux extrémités dans la direction s'étendant sensiblement perpendiculairement à la direction dans laquelle la surface principale de la feuille isolante s'étend, ont une plus grande largeur de ligne que les autres électrodes de bobine (14b, 14c).

3. Procédé pour fabriquer un dispositif à circuit intégré, CI, comprenant :
une étape pour former les électrodes de bobine (14a-14d) sur une pluralité de feuilles isolantes (12a-12d) ; et
une étape pour empiler la pluralité de feuilles isolantes (12a-12d) les unes sur le dessus des autres de sorte que les électrodes de bobine (14a-14d) sont superposées les unes sur les autres et forment ainsi un seul anneau, lorsqu'elles sont observées en plan à partir d'une direction s'étendant sensiblement perpendiculairement à une direction dans laquelle la surface principale des feuilles isolantes (12a-12d) s'étend,
**caractérisé par** la formation des électrodes de bobine (14a-14d) et l'empilement des feuilles isolantes (12a-12d) de sorte qu'une valeur minimum d'une distance D1 entre un bord externe de l'anneau et les bords externes des feuilles isolantes (12a-12d) est supérieure à une distance D2 dans la direction s'étendant sensiblement perpendiculairement à la direction dans laquelle la surface principale des feuilles isolantes s'étend entre la pluralité d'électrodes de bobine (14a-14d).

4. Procédé selon la revendication 3, comprenant en outre les étapes suivantes :
former les électrodes de bobine (14b, 14c, 24a, 24d) et empiler les feuilles isolantes (12a-12d) de sorte que les électrodes de bobine (24a, 24d) positionnées aux deux extrémités dans la direction dans laquelle la surface principale de la feuille isolante s'étend, ont une plus grande largeur de ligne que les autres électrodes de bobine (14b, 14c).

5. Dispositif à CI sans fil selon la revendication 1 ou 2,
dans lequel les électrodes de bobine positionnées aux deux extrémités dans la direction s'étendant sensiblement perpendiculairement à la direction dans laquelle la surface principale des feuilles isolantes s'étend, forment une boucle sur une longueur inférieure à un circuit autour d'un axe de bobine de l'antenne de bobine.

6. Dispositif à CI sans fil selon la revendication 1 ou 2,
dans lequel les électrodes de bobine positionnées aux deux extrémités dans la direction s'étendant sensiblement perpendiculairement à la direction dans laquelle la surface principale de la feuille isolante s'étend, recouvrent au moins une partie des autres électrodes de bobine, lorsqu'elles sont observées en plan à partir de la direction s'étendant sensiblement perpendiculairement à la direction dans laquelle la surface principale de la feuille isolante s'étend.

7. Dispositif à CI sans fil selon l'une quelconque des revendications 1, 2, 5 ou 6,
dans lequel les électrodes de bobine différentes de celles positionnées aux deux extrémités dans la direction s'étendant sensiblement perpendiculairement à la direction dans laquelle la surface principale de la feuille isolante s'étend, forment une boucle sur une longueur d'au moins un circuit autour de l'axe de bobine.

8. Dispositif à CI sans fil selon l'une quelconque des revendications 1, 2, 5, 6 ou 7, comprenant en outre :
un CI sans fil (18) qui est raccordé à la bobine d'antenne L et traite les signaux de transmission et de réception.

9. Dispositif à CI sans fil selon la revendication 8, comprenant en outre :
un premier connecteur qui est raccordé au CI sans fil et est raccordé à l'électrode de bobine sur la feuille isolante positionnée sur le côté le plus haut dans la direction s'étendant sensiblement perpendiculairement à la direction dans laquelle la surface principale de la feuille isolante s'étend ;
un deuxième connecteur qui est raccordé au CI sans fil sur la feuille isolante qui est positionnée sur le côté le plus haut dans la direction s'étendant sensiblement perpendiculairement à la direction dans laquelle la surface principale de la feuille isolante s'étend ;
un troisième connecteur qui est prévu sur l'une des feuilles isolantes différentes des feuilles isolantes positionnée sur le côté le plus haut et sur le côté le plus bas dans la direction s'étendant sensiblement perpendiculairement à la direction dans laquelle la surface principale de la feuille isolante s'étend et qui est superposé sur le deuxième connecteur, lorsqu'il est observé en plan à partir de la direction s'étendant sensiblement perpendiculairement à la direction dans laquelle la surface principale de la feuille isolante s'étend ; et
un quatrième connecteur qui est raccordé à l'électrode de bobine sur une feuille isolante positionnée sur le côté le plus bas dans la direction s'étendant sensiblement perpendiculairement à la direction dans laquelle la surface principale de la feuille isolante s'étend et qui est superposé sur le deuxième connecteur, lorsqu'il est observé en plan à partir de la direction s'étendant sensiblement perpendiculairement à la direction dans laquelle la surface principale de la feuille isolante s'étend ;
dans lequel le premier connecteur, le deuxième connecteur, le troisième connecteur et le quatrième connecteur sont raccordés entre eux dans la même position, lorsqu'ils sont observés en plan à partir de la direction s'étendant sensiblement perpendiculairement à la direction dans laquelle la surface principale de la feuille isolante s'étend.

10. Dispositif à CI sans fil selon l'une quelconque des revendications 1, 5, 6 ou 7, comprenant en outre :
un module de couplage électromagnétique qui comprend un CI sans fil qui traite les signaux de transmission et de réception et une carte de circuit imprimé de dispositif d'alimentation ayant un élément d'inductance qui est raccordé au CI sans fil et est raccordé à la bobine d'antenne.

11. Dispositif à CI sans fil selon la revendication 10, comprenant en outre :
un premier connecteur qui est raccordé à la carte de circuit imprimé de dispositif d'alimentation et à l'électrode de bobine sur la feuille isolante qui est positionnée sur le côté le plus haut dans la direction s'étendant sensiblement perpendiculairement à la direction dans laquelle la surface principale de la feuille isolante s'étend ;
un deuxième connecteur qui est raccordé à la carte de circuit imprimé de dispositif d'alimentation sur la feuille isolante qui est positionnée sur le côté le plus haut dans la direction s'étendant sensiblement perpendiculairement à la direction dans laquelle la surface principale de la feuille isolante s'étend ;
un troisième connecteur qui est prévu sur l'une des feuilles isolantes différentes des feuilles isolantes positionnée sur le côté le plus haut et le côté le plus bas dans la direction s'étendant sensiblement perpendiculairement à la direction dans laquelle la surface principale de la feuille isolante s'étend et qui est superposé sur le deuxième connecteur, lorsqu'il est observé en plan à partir de la direction s'étendant sensiblement perpendiculairement à la direction dans laquelle la surface principale de la feuille isolante s'étend ; et
un quatrième connecteur qui est raccordé à l'électrode de bobine sur la feuille isolante positionnée sur le côté le plus bas dans la direction s'étendant sensiblement perpendiculairement à la direction dans laquelle la surface principale de la feuille isolante s'étend et qui est superposé sur le second connecteur, lorsqu'il est observé en plan à partir de la direction s'étendant sensiblement perpendiculairement à la direction dans laquelle la surface principale de la feuille isolante s'étend ;
dans lequel le premier connecteur, le deuxième connecteur, le troisième connecteur et la quatrième connecteur sont raccordés entre eux dans la même position, lorsqu'ils sont observés en plan à partir de la direction s'étendant sensiblement perpendiculairement à la direction dans laquelle la surface principale de la feuille isolante s'étend.

12. Dispositif à CI sans fil selon la revendication 8, dans lequel le CI sans fil est prévu afin d'être superposé sur un seul anneau formé par la pluralité d'électrodes de bobine, lorsqu'il est observé en plan à partir de la direction s'étendant sensiblement perpendiculairement à la direction dans laquelle la surface principale de la feuille isolante s'étend.

13. Dispositif à CI sans fil selon l'une quelconque des revendications 1, 2 ou 5 à 11, comprenant en outre :
un conducteur de connexion qui est prévu dans une position superposée sur les électrodes de bobine positionnées aux deux extrémités dans la direction s'étendant sensiblement perpendiculairement à la direction dans laquelle la surface principale de la feuille isolante s'étend, lorsqu'elles sont observées en plan à partir de la direction s'étendant sensiblement perpendiculairement à la direction dans laquelle la surface principale de la feuille isolante s'étend et qui raccorde la pluralité des électrodes de bobine entre elles.

14. Dispositif à CI sans fil selon l'une quelconque des revendications 1, 2 ou 5 à 12, dans lequel l'électrode de bobine positionnée sur le côté le plus haut ou l'électrode de bobine positionnée sur le côté le plus bas dans la direction sensiblement perpendiculairement à la direction dans laquelle la surface principale de la feuille isolante s'étend, est séparée et n'est pas côte à côte avec l'électrode de bobine dans une région débouchante de l'anneau.

15. Procédé pour fabriquer le dispositif à CI sans fil selon la revendication 3 ou 4, comprenant en outre :
une étape pour former un premier connecteur qui est raccordé à l'électrode de bobine sur la feuille isolante qui est positionnée sur le côté le plus haut dans la direction s'étendant sensiblement perpendiculairement à la direction dans laquelle la surface principale de la feuille isolante s'étend ;
une étape pour former un deuxième connecteur sur la feuille isolante qui est positionnée sur le côté le plus haut dans la direction s'étendant sensiblement perpendiculairement à la direction dans laquelle la surface principale de la feuille isolante s'étend ;
une étape pour former un troisième connecteur sur l'une des feuilles isolantes différentes des feuilles isolantes positionnée sur le côté le plus haut et le côté le plus bas dans la direction s'étendant sensiblement perpendiculairement à la direction dans laquelle la surface principale de la feuille isolante s'étend et qui est superposé sur le deuxième connecteur, lorsqu'il est observé en plan à partir de la direction s'étendant sensiblement perpendiculairement à la direction dans laquelle la surface principale de la feuille isolante s'étend ;
une étape pour former un quatrième connecteur qui est raccordé à l'électrode de bobine sur la feuille isolante positionnée sur le côté le plus bas dans la direction s'étendant sensiblement perpendiculairement à la direction dans laquelle la surface principale de la feuille isolante s'étend et qui est superposé sur le deuxième connecteur, lorsqu'il est observé en plan à partir de la direction s'étendant sensiblement perpendiculairement à la direction dans laquelle la surface principale de la feuille isolante s'étend ; et
une étape pour former le premier connecteur, le deuxième connecteur, le troisième connecteur et le quatrième connecteur ensemble, après avoir empilé la pluralité de feuilles isolantes les unes au-dessus des autres.
